# EUROPEAN PATENT APPLICATION

(11) **EP 4 597 896 A1**
(43) Date of publication of application: **06.08.2025**
(21) Application number: 23870316.9
(22) Date of filing: 12.09.2023
(51) Int. Cl.: H04L 5/00, H04W 48/10

(54) **SIGNAL TRANSMISSION METHOD, APPARATUS, DEVICE, AND MEDIUM**

(30) Priority: 30.09.2022 CN 202211214266
(71) Applicant: Datang Mobile Communications Equipment Co., Ltd., Beijing 100085 (CN)
(72) Inventor: YANG, Meiying, Beijing 100085 (CN); WANG, Jiaqing, Beijing 100085 (CN); LUO, Chen, Beijing 100085 (CN); LI, Yaomin, Beijing 100085 (CN); SU, Yuwan, Beijing 100085 (CN); CHENG, Fangchen, Beijing 100085 (CN)
(74) Representative: Studio Torta S.p.A.
(86) International application number: PCT/CN2023/118394
(87) International publication number: WO 2024/067079

(57) **Abstract**

The present disclosure provides a signal transmission method and apparatus, and a medium, and the method includes: sending system information block signaling in a first cell, or sending the system information block signaling in the first cell and a cell group, where the system information block signaling includes configuration information for access by user equipment in the first cell and/or the cell group, and the cell group includes other cells except the first cell; and performing signal transmission with user equipment which performs access according to the system information block signaling. In this technical solution, by sending the SIB signaling in the first cell or sending the SIB signaling in the first cell and the first cell group, to configure the first cell and/or the first cell group with information used for random access of the user equipment, access performance of the user equipment in the first cell and/or the cell group under a sparse SSB can be improved on the basis of reducing energy consumption of a base station.

## Description

This disclosure claims priority to Chinese patent application No. 202211214266.7, filed with the China National Intellectual Property Administration on September 30, 2022, and entitled "Signal Transmission Method and Apparatus, and Medium", the entire contents of which are incorporated herein by reference.

### TECHNICAL FIELD

The present disclosure relates to the field of communication technology and, in particular, to a signal transmission method and apparatus, and a medium.

### BACKGROUND

Compared to 4G communication technology, 5G communication technology supports technologies of high frequency band, large bandwidth, and large-scale antenna, and system performance is provided, while at the same time power consumption of a 5G base station is also correspondingly increased. For this reason, energy consumption of the 5G base station needs to be reduced as much as possible.

In the prior art, energy consumption is reduced mainly by sending, by a based station, a sparse synchronization block (Synchronization signal/PBCH block, SSB) or directly not sending, by the based station, an SSB in a current cell.

However, when the base station sends the sparse SSB or directly does not send the SSB in the prior art, the sparse SSB affects access performance of user equipment (User Equipment, UE), causing the UE to have difficulty in realizing random access, which ultimately tends to result in signals between the base station and the UE not being transmitted normally.

### SUMMARY

The present disclosure provides a signal transmission method and apparatus, and a medium, and solves a technical problem that it is difficult for UE to realize random access when a base station sends a sparse SSB or does not send an SSB to reduce energy consumption in the prior art.

In a first aspect, the present disclosure provides a signal transmission method, applied to an access network device, and the method includes:
sending system information block signaling in a first cell, or sending the system information block signaling in the first cell and a cell group, where the system information block signaling includes configuration information for access by user equipment in the first cell and/or the cell group, and the cell group includes other cells except the first cell; and
performing signal transmission with user equipment which performs access according to the system information block signaling.

In an embodiment of the present disclosure, by sending the SIB signaling in the first cell or sending the SIB signaling in the first cell and the first cell group, to configure the first cell and/or the first cell group with information used for random access of the user equipment, access performance of the UE under a sparse SSB can be improved on the basis of reducing energy consumption of the base station.

Optionally, the performing the signal transmission with the user equipment which performs access according to the system information block signaling includes:
determining, according to the configuration information in the system information block signaling, a transmission and reception position of a random access channel resource configured for the first cell and/or the cell group; and
receiving, according to the transmission and reception position of the random access channel resource configured for the first cell and/or the cell group, information transmitted by the user equipment which performs access according to the system information block signaling.

In the embodiment of the present disclosure, based on the transmission and reception position of the random access channel resource of the cell group, a signal connection between the base station and the user equipment can be realized, and normal information transmission between the base station and the user equipment can be realized.

Optionally, the configuration information for the access by the user equipment in the first cell and/or the cell group includes at least one of the following: configuration information of a cell, configuration information of a random access channel resource, or configuration information of an information transmission resource.

In the embodiment of the present disclosure, by sending, across the cell, the configuration information of the cell, the configuration information of the random access channel resource, and the configuration information of the information transmission resource for a first cell group, random access performance of the UE can be improved, random access of the UE in the first cell group can be realized, and the normal information transmission between the UE and the base station can be ensured.

Optionally, the configuration information of the cell, the configuration information of the random access channel resource, and the configuration information of the information transmission resource include at least one of explicitly indicated configuration information or implicitly indicated configuration information;
where the explicitly indicated configuration information includes at least one of the following:
explicitly indicated configuration information of the cell;
explicitly indicated configuration information of the random access channel resource; or
explicitly indicated configuration information of the information transmission resource; and
the implicitly indicated configuration information includes at least one of the following:
   implicitly indicated configuration information of the cell;
   implicitly indicated configuration information of the random access channel resource; or
   implicitly indicated configuration information of the information transmission resource.

Optionally, the explicitly indicated configuration information of the cell includes at least one of the following:
cell information of the first cell; or
cell information of the cell group;
the explicitly indicated configuration information of the random access channel resource includes at least one of the following:
   configuration information of the random access channel resource; or
   association information of the random access channel resource;
   the explicitly indicated configuration information of the information transmission resource includes at least one of the following:
      configuration information of the information transmission resource; or
      association information of the information transmission resource;
      the implicitly indicated configuration information of the cell includes at least one of the following:
         flag information of the cell information of the first cell; or
         flag information of the cell information of the cell group;
         the implicitly indicated configuration information of the random access channel resource includes at least one of the following:
            flag information of the random access channel resource; or
            flag information of the association information of the random access channel resource; and
            the implicitly indicated configuration information of the information transmission resource includes at least one of the following:
               flag information of the information transmission resource; or
               flag information of the association information of the information transmission resource.

Optionally, the configuration information of the random access channel resource includes at least one of the following:
a random access channel resource of the first cell; or
a random access channel resource of the cell group; and
the association information of the random access channel resource includes:
   synchronization block information associated with the random access channel resource;
   cell information associated with the random access channel resource; and
   control resource set information associated with the random access channel resource.

Optionally, the configuration information of the information transmission resource includes at least one of the following:
an information transmission resource of the first cell; or
an information transmission resource of the cell group, the information transmission resource including configuration information of a first message, configuration information of a second message, and configuration information of a third message; and
the association information of the information transmission resource includes at least one of the following:
   synchronization block information associated with the information transmission resource;
   cell information associated with the information transmission resource; or
   control resource set information associated with the information transmission resource.

Optionally, the cell information of the first cell includes at least one of the following:
an identification of the first cell;
synchronization block information of the first cell;
control resource set information of the first cell;
a search space of the first cell; or
system information block signaling of the first cell; and
the cell information of the cell group includes at least one of the following:
   identification information of the cell group;
   synchronization block information of the cell group;
   a control resource set of the cell group;
   a search space of the cell group; or
   system information block signaling of the cell group.

Optionally, the flag information of the cell information of the first cell includes: the identification of the first cell; and the flag information of the cell information of the cell group includes an identification of the cell group, and/or an identification of a second cell of the cell group.

Optionally, the flag information of the random access channel resource includes at least one of the following:
whether the random access channel resource of the first cell is applied to the cell group;
whether the random access channel resource of the first cell is applied to the second cell in the cell group; or
whether the random access channel resource of the cell group is applied to the second cell in the cell group; and
the flag information of the association information of the random access channel resource includes at least one of the following:
   whether the random access channel resource of the cell group is associated with the synchronization block information of the first cell;
   whether the random access channel resource of the cell group and/or a random access channel resource of the second cell are associated with a normal synchronization block and a priority of the normal synchronization block; or
   whether the random access channel resource of the cell group and/or the random access channel resource of the second cell are associated with a sparse synchronization block.

In the embodiment of the present disclosure, by providing the flag information of the random access channel resource, whether a random access channel resource currently configured for the first cell can be applied to the cell group or the second cell can be identified, to enable the base station to selectively perform information transmission with user equipment of different cells.

Optionally, the flag information of the information transmission resource includes: whether the information transmission resource of the first cell is applied to the cell group; and
the flag information of the association information of the information transmission resource includes:
whether the information transmission resource of the cell group is associated with the synchronization block information of the first cell;
whether the information transmission resource of the cell group is associated with a normal synchronization block and a priority of the normal synchronization block; and
whether the information transmission resource of the cell group is associated with a sparse synchronization block.

Optionally, the normal synchronization block includes at least one of a configuration of a synchronization block supported in a preset protocol, a configuration of remaining minimum system information associated with a synchronization block, a configuration of a random access channel resource associated with a synchronization block, or a configuration of paging associated with a synchronization block.

Optionally, the sparse synchronization block includes at least one of: synchronization block parameters being configured as partial parameters defined in a preset protocol, a configuration of a target synchronization block which is beyond definition by the preset protocol, a configuration of remaining minimum system information associated with a synchronization block, a configuration of a random access channel resource associated with a synchronization block, or a configuration of paging associated with a synchronization block.

Optionally, the system information block signaling includes at least one of first system information block signaling, second system information block signaling, third system information block signaling, or fourth system information block signaling;
the first system information block signaling is used for configuring the random access channel resource of the first cell and for configuring the random access channel resource of the cell group;
the second system information block signaling is used for configuring the random access channel resource of the cell group;
the third system information block signaling is used for configuring the random channel access resource of the second cell of the cell group; and
the fourth system information block signaling is used for configuring random channel access resources of other cells except the second cell in the cell group.

In the embodiment of the present disclosure, by configuring multiple pieces of system information block signaling, the base station is enabled to send different configuration information according to different system information signaling blocks, which facilitates targeted configuration of information for different cells.

Optionally, the random access channel resource includes a time-domain resource and a frequency-domain resource, where the time-domain resource includes a physical random access channel time-domain resource configuration index, a period, a system frame number, a subframe/time slot number, a starting symbol and a number of random access occasions within a time slot, and the frequency-domain resource includes a number of different physical random access channel frequency-domain resources which are frequency-division-multiplexed on a same time-domain resource.

In a second aspect, an embodiment of the present disclosure provides a signal transmission method, applied to user equipment, and the method includes:
receiving system information block signaling sent in a first cell by an access network device, or system information block signaling sent in the first cell and a cell group, where the cell group includes other cells except the first cell, and the system information block signaling includes configuration information for access by user equipment in the first cell and/or the cell group; and
performing, according to the system information block signaling, signal transmission with the access network device.

Optionally, the configuration information for the access by the user equipment in the first cell and/or the cell group includes at least one of the following: configuration information of a cell, configuration information of a random access channel resource, or configuration information of an information transmission resource.

Optionally, the information transmission resource includes configuration information of a first message, configuration information of a second message, and configuration information of a third message, and at least one of the configuration information of the first message, the configuration information of the second message, or the configuration information of the third message is associated with synchronization block information of the first cell.

Optionally, the performing, according to the system information block signaling, the signal transmission with the access network device includes:
acquiring a random access channel resource in the system information block signaling and performing information transmission on the random access channel resource.

Optionally, the performing, according to the system information block signaling, the signal transmission with the access network device includes:
receiving the configuration information of the first message, the configuration information of the second message, and the configuration information of the third message; and
performing information transmission on the configuration information of the first message, the configuration information of the second message, and the configuration information of the third message.

Optionally, the random access channel resource includes a time-domain resource and a frequency-domain resource, where the time-domain resource includes a physical random access channel time-domain resource configuration index, a period, a system frame number, a subframe/time slot number, a starting symbol and a number of random access occasions within a time slot, and the frequency-domain resource includes a number of different physical random access channel frequency-domain resources which are frequency-division-multiplexed on a same time-domain resource.

In a third aspect, an embodiment of the present disclosure provides a signal transmission apparatus, the apparatus being disposed in an access network device, and the apparatus including a memory, a transceiver, and a processor:
where the memory is configured to store a computer program; the transceiver is configured to transmit and receive data under control of the processor; and the processor is configured to read the computer program in the memory and execute following operations:
sending system information block signaling in a first cell, or sending the system information block signaling in the first cell and a cell group, where the system information block signaling includes configuration information for access by user equipment in the first cell and/or the cell group, and the cell group includes other cells except the first cell; and
performing signal transmission with user equipment which performs access according to the system information block signaling.

Optionally, when performing the signal transmission with the user equipment which performs access according to the system information block signaling, the processor may specifically be configured to:
determine, according to the configuration information in the system information block signaling, a transmission and reception position of a random access channel resource configured for the first cell and/or the cell group; and
receive, according to the transmission and reception position of the random access channel resource configured for the first cell and/or the cell group, information transmitted by the user equipment which performs access according to the system information block signaling.

Optionally, the configuration information for the access by the user equipment in the first cell and/or the cell group includes at least one of the following: configuration information of a cell, configuration information of a random access channel resource, or configuration information of an information transmission resource.

Optionally, the configuration information of the cell, the configuration information of the random access channel resource, and the configuration information of the information transmission resource include at least one of explicitly indicated configuration information or implicitly indicated configuration information;
where the explicitly indicated configuration information includes at least one of the following:
explicitly indicated configuration information of the cell;
explicitly indicated configuration information of the random access channel resource; or
explicitly indicated configuration information of the information transmission resource; and
the implicitly indicated configuration information includes at least one of the following:
   implicitly indicated configuration information of the cell;
   implicitly indicated configuration information of the random access channel resource; or
   implicitly indicated configuration information of the information transmission resource.

Optionally, the explicitly indicated configuration information of the cell includes at least one of the following:
cell information of the first cell; or
cell information of the cell group;
the explicitly indicated configuration information of the random access channel resource includes at least one of the following:
   configuration information of the random access channel resource; or
   association information of the random access channel resource;
   the explicitly indicated configuration information of the information transmission resource includes at least one of the following:
      configuration information of the information transmission resource; or
      association information of the information transmission resource;
      the implicitly indicated configuration information of the cell includes at least one of the following:
         flag information of the cell information of the first cell; or
         flag information of the cell information of the cell group;
         the implicitly indicated configuration information of the random access channel resource includes at least one of the following:
            flag information of the random access channel resource; or
            flag information of the association information of the random access channel resource; and
            the implicitly indicated configuration information of the information transmission resource includes at least one of the following:
               flag information of the information transmission resource; or
               flag information of the association information of the information transmission resource.

Optionally, the configuration information of the random access channel resource includes at least one of the following:
a random access channel resource of the first cell; or
a random access channel resource of the cell group; and
the association information of the random access channel resource includes:
   synchronization block information associated with the random access channel resource;
   cell information associated with the random access channel resource; and
   control resource set information associated with the random access channel resource.

Optionally, the configuration information of the information transmission resource includes at least one of the following:
an information transmission resource of the first cell; or
an information transmission resource of the cell group, the information transmission resource including configuration information of a first message, configuration information of a second message, and configuration information of a third message; and
the association information of the information transmission resource includes at least one of the following:
   synchronization block information associated with the information transmission resource;
   cell information associated with the information transmission resource; or
   control resource set information associated with the information transmission resource.

Optionally, the cell information of the first cell includes at least one of the following:
an identification of the first cell;
synchronization block information of the first cell;
control resource set information of the first cell;
a search space of the first cell; or
system information block signaling of the first cell; and
the cell information of the cell group includes at least one of the following:
   identification information of the cell group;
   synchronization block information of the cell group;
   a control resource set of the cell group;
   a search space of the cell group; or
   system information block signaling of the cell group.

Optionally, the flag information of the cell information of the first cell includes: the identification of the first cell; and the flag information of the cell information of the cell group includes an identification of the cell group, and/or an identification of a second cell of the cell group.

Optionally, the flag information of the random access channel resource includes at least one of the following:
whether the random access channel resource of the first cell is applied to the cell group;
whether the random access channel resource of the first cell is applied to the second cell in the cell group; or
whether the random access channel resource of the cell group is applied to the second cell in the cell group; and
the flag information of the association information of the random access channel resource includes at least one of the following:
   whether the random access channel resource of the cell group is associated with the synchronization block information of the first cell;
   whether the random access channel resource of the cell group and/or a random access channel resource of the second cell are associated with a normal synchronization block and a priority of the normal synchronization block; or
   whether the random access channel resource of the cell group and/or the random access channel resource of the second cell are associated with a sparse synchronization block.

Optionally, the flag information of the information transmission resource includes: whether the information transmission resource of the first cell is applied to the cell group; and
the flag information of the association information of the information transmission resource includes:
whether the information transmission resource of the cell group is associated with the synchronization block information of the first cell;
whether the information transmission resource of the cell group is associated with a normal synchronization block and a priority of the normal synchronization block; and
whether the information transmission resource of the cell group is associated with a sparse synchronization block.

Optionally, the normal synchronization block includes at least one of a configuration of a synchronization block supported in a preset protocol, a configuration of remaining minimum system information associated with a synchronization block, a configuration of a random access channel resource associated with a synchronization block, or a configuration of paging associated with a synchronization block.

Optionally, the sparse synchronization block includes at least one of: synchronization block parameters being configured as partial parameters defined in a preset protocol, a configuration of a target synchronization block which is beyond definition by the preset protocol, a configuration of remaining minimum system information associated with a synchronization block, a configuration of a random access channel resource associated with a synchronization block, or a configuration of paging associated with a synchronization block.

Optionally, the system information block signaling includes at least one of first system information block signaling, second system information block signaling, third system information block signaling, or fourth system information block signaling;
the first system information block signaling is used for configuring the random access channel resource of the first cell and for configuring the random access channel resource of the cell group;
the second system information block signaling is used for configuring the random access channel resource of the cell group;
the third system information block signaling is used for configuring the random channel access resource of the second cell of the cell group; and
the fourth system information block signaling is used for configuring random channel access resources of other cells except the second cell in the cell group.

Optionally, the random access channel resource includes a time-domain resource and a frequency-domain resource, where the time-domain resource includes a physical random access channel time-domain resource configuration index, a period, a system frame number, a subframe/time slot number, a starting symbol and a number of random access occasions within a time slot, and the frequency-domain resource includes a number of different physical random access channel frequency-domain resources which are frequency-division-multiplexed on a same time-domain resource.

In a fourth aspect, an embodiment of the present disclosure provides a signal transmission apparatus, the apparatus being disposed in user equipment, and the apparatus including a memory, a transceiver, and a processor:
where the memory is configured to store a computer program; the transceiver is configured to transmit and receive data under control of the processor; and the processor is configured to read the computer program in the memory and execute following operations:
receiving system information block signaling sent in a first cell by an access network device, or system information block signaling sent in the first cell and a cell group, where the cell group includes other cells except the first cell, and the system information block signaling includes configuration information for access by user equipment in the first cell and/or the cell group; and
performing, according to the system information block signaling, signal transmission with the access network device.

Optionally, the configuration information for the access by the user equipment in the first cell and/or the cell group includes at least one of the following: configuration information of a cell, configuration information of a random access channel resource, or configuration information of an information transmission resource.

Optionally, the information transmission resource includes configuration information of a first message, configuration information of a second message, and configuration information of a third message, and at least one of the configuration information of the first message, the configuration information of the second message, or the configuration information of the third message is associated with synchronization block information of the first cell.

Optionally, when performing, according to the system information block signaling, the signal transmission with the access network device, the processor is specifically configured to:
acquire a random access channel resource in the system information block signaling and perform information transmission on the random access channel resource.

Optionally, when performing, according to the system information block signaling, the signal transmission with the access network device, the processor is specifically configured to:
receive the configuration information of the first message, the configuration information of the second message, and the configuration information of the third message; and
perform information transmission on the configuration information of the first message, the configuration information of the second message, and the configuration information of the third message.

Optionally, the random access channel resource includes a time-domain resource and a frequency-domain resource, where the time-domain resource includes a physical random access channel time-domain resource configuration index, a period, a system frame number, a subframe/time slot number, a starting symbol and a number of random access occasions within a time slot, and the frequency-domain resource includes a number of different physical random access channel frequency-domain resources which are frequency-division-multiplexed on a same time-domain resource.

In a fifth aspect, an embodiment of the present disclosure provides a signal transmission apparatus, the apparatus being disposed in an access network device, and the apparatus including:
a sending module, configured to send system information block signaling in a first cell, or send the system information block signaling in the first cell and a cell group, where the system information block signaling includes configuration information for access by user equipment in the first cell and/or the cell group, and the cell group includes other cells except the first cell; and
a receiving module, configured to perform signal transmission with user equipment which performs access according to the system information block signaling.

In a sixth aspect, an embodiment of the present disclosure provides a signal transmission apparatus, the apparatus being disposed in user equipment, and the apparatus including:
a receiving module, configured to receive system information block signaling sent in a first cell by an access network device, or system information block signaling sent in the first cell and a cell group, where the cell group includes other cells except the first cell, and the system information block signaling includes configuration information for access by user equipment in the first cell and/or the cell group; and
a transmission module, configured to perform, according to the system information block signaling, signal transmission with the access network device.

In a seventh aspect, the present disclosure provides a processor readable storage medium, where the processor readable storage medium stores a computer program, and the computer program is used for causing the processor to execute the method described above.

The present disclosure provides a signal transmission method and apparatus, and a medium, by sending the system information block signaling in the first cell or sending the system information block signaling in the first cell and the cell group, to configure the first cell and/or the cell group with information used for random access of the user equipment, access performance of the UE in the first cell and/or the cell group under a sparse SSB can be improved on the basis of reducing energy consumption of the base station.

It should be understood that contents described in the above summary are not intended to limit key or important features of the embodiments in the present disclosure, nor are they intended to limit the scope of the present disclosure. Other features of the present disclosure will become readily understood by following descriptions.

### BRIEF DESCRIPTION OF DRAWINGS

FIG. 1 is a diagram of an SSB burst set provided by an embodiment of the present disclosure.
FIG. 2 is a diagram in which SSBs are associated with ROs provided by an embodiment of the present disclosure.
FIG. 3 is an interaction diagram of a signal transmission method provided by an embodiment of the present disclosure.
FIG. 4 is an interaction diagram of a signal transmission method provided by an embodiment of the present disclosure.
FIG. 5 is a diagram of configuration of cell information provided by an embodiment of the present disclosure.
FIG. 6 is a diagram of first SIB signaling and second SIB signaling provided by an embodiment of the present disclosure.
FIG. 7 is a diagram of first SIB signaling and second SIB signaling provided by another embodiment of the present disclosure.
FIG. 8 is a diagram indicating RACH resource association of a first cell group provided by an embodiment of the present disclosure.
FIG. 9 is a diagram indicating RACH resource association of a first cell group provided by another embodiment of the present disclosure.
FIG. 10 is a diagram indicating whether RACH resources of a first cell are applied to a first cell group provided by an embodiment of the present disclosure.
FIG. 11 is a diagram indicating whether RACH resources of a first cell are applied to a first cell group provided by another embodiment of the present disclosure.
FIG. 12 is an interaction diagram of a signal transmission method provided by another embodiment of the present disclosure.
FIG. 13 is a diagram of third SIB signaling and fourth SIB signaling provided by an embodiment of the present disclosure.
FIG. 14 is a diagram indicating RACH resource association of a first cell group provided by an embodiment of the present disclosure.
FIG. 15 is an interaction diagram of a signal transmission method provided by another embodiment of the present disclosure.
FIG. 16 is a diagram of cell information of an SSB associated with a second cell of a first cell group provided by an embodiment of the present disclosure.
FIG. 17 is a diagram of cell information of an SSB associated with a second cell of a first cell group provided by another embodiment of the present disclosure.
FIG. 18 is an interaction diagram of a signal transmission method provided by an embodiment of the present disclosure.
FIG. 19 is a structural diagram of a signal transmission apparatus provided by an embodiment of the present disclosure.
FIG. 20 is a structural diagram of a signal transmission apparatus provided by another embodiment of the present disclosure.
FIG. 21 is a structural diagram of a signal transmission apparatus provided by yet another embodiment of the present disclosure.
FIG. 22 is a structural diagram of a signal transmission apparatus provided by a further embodiment of the present disclosure.

### DESCRIPTION OF EMBODIMENTS

In embodiments of the present disclosure, the term "multiple" refers to two or more, and other quantifiers are similar. In embodiments of the present disclosure, the term "and/or" describes an association relationship of associated objects, and indicates that three types of relationships may exist. For example, A and/or B may represent that the following three situations: A exists alone, A and B exist at the same time, and B exists alone. Character "/" generally indicates an "or" relationship between associated objects before and after it.

Technical solutions provided by embodiments of the present disclosure may be applicable to a variety of systems. An example is a 5G New Radio (New Radio, NR) system, and each of the variety of systems includes a terminal device and a network device. Core network components, for example, an evolved packet system (Evloved Packet System, EPS), a 5G system (5GS), etc., may also be included in the systems.

A network device involved in embodiments of the present disclosure may be a base station, and the base station may include a plurality of cells providing services to a terminal. Depending on a specific application scenario, the base station may also be referred to as an access point, or may be a device in an access network that communicates with a wireless terminal device over one or more sectors on an air interface, or may have other names. The network device may be configured to interchange received over-the-air frames with Internet protocol (IP) packets, acting as a router between the wireless terminal device and the remainder of the access network, where the remainder of the access network may include an Internet protocol (IP) communication network. The network device may also coordinate management of an attribute of the air interface. For example, the network device involved in the embodiments of the present disclosure may be a network device (Base Transceiver Station, BTS) in a global system for mobile communications (Global System for Mobile communications, GSM) or code division multiple access (Code Division Multiple Access, CDMA), or a network device (Node B) in wide-band code division multiple access (Wide-band Code Division Multiple Access, WCDMA), or a evolutional network device (evolutional Node B, eNB or e-Node B) in a long term evolution (long term evolution, LTE) system, a 5G base station (gNB) in a 5G network architecture (next generation system), or a home evolved base station (Home evolved Node B, HeNB), a relay node (relay node), a home base station (femto), a pico base station (pico), etc., which is not limited in the embodiments of the present disclosure. In some network structures, the network device may include a centralized unit (centralized unit, CU) node and a distributed unit (distributed unit, DU) node, and a centralized unit and a distributed unit may also be arranged separately in terms of geography.

Multi input multi output (Multi Input Multi Output, MIMO) transmissions may be performed between a network device and a terminal device each using one or more antennas, and the MIMO transmissions may be either single user MIMO (Single User MIMO, SU-MIMO) or multiple user MIMO (Multiple User MIMO, MU-MIMO). Depending on a form and a number of antenna combinations, the MIMO transmission may be 2D-MIMO, 3D-MIMO, FD-MIMO, or massive-MIMO, or may be diversity transmission or precoding transmission or beamforming transmission, etc.

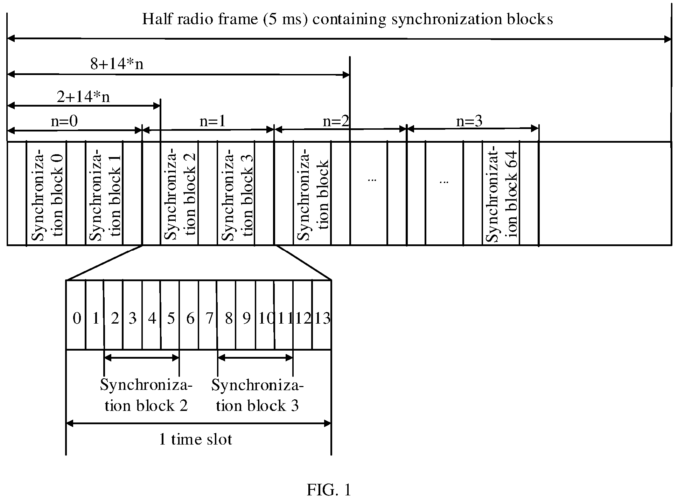

In order to clearly understand the technical solutions of the present disclosure, related art is first described in detail. In the 5G standards, in order to support user equipment (User Equipment, UE) access and transmission, the NR Rel-15 standards (Rel-15 is the first version of the 5G standards) standardizes the synchronization block (SSB, Synchronization signal/PBCH block), and each SSB consists of a primary synchronization signal (Primary Synchronization Signal, PSS), a secondary synchronization signal (Secondary Synchronization Signal, SSS), and a physical broadcast channel (Physical Broadcast Channel, PBCH) with 4 orthogonal frequency-division multiplexing (Orthogonal Frequency-Division Multiplexing, OFDM) symbols in the time domain and 20 physical resource blocks (Physical Resource Block, PRB) in the frequency domain. At the same time, a base station on a network side implements one beam sweeping by transmitting one SSB burst set (SSB burst) to cover the entire cell service area. According to the NR protocol, each SSB burst is transmitted within 5 ms and contains L SSBs, where a corresponding maximum L is 8 in frequency range 1 (FR1), and a corresponding maximum L is 64 in frequency range 2 (FR2). FIG. 1 is a diagram of an SSB burst set provided by an embodiment of the present disclosure, where each SSB corresponds to a transmitting beam. The 5G protocol further supports {5, 10, 20, 40, 80, 160} ms, and the UE defaults to an SSB default transmission period of 20 ms, and the UE obtains an actual SSB transmission period after finishing initial cell search.

The UE obtains a specific configuration of a random access occasion (RACH occasion, RO) by decoding channel quality information (Channel Quality Information, SIB) signaling sent in a current cell by the base station, and initiates contention-based random access to a currently residing cell, i.e., the UE sends a Zaddoff Chu sequence-based random access preamble (Preamble) to the base station on the RO. If the UE has beam reciprocity, the UE determines, with a receiving beam, a transmitting beam for sending the preamble. If the UE does not have the beam reciprocity, the UE sends the preamble using a one-by-one attempt approach, i.e., uplink beam scanning. The base station side implements, by receiving beamforming, reception of a preamble signal sent by the UE. If beam reciprocity on the base station side does not hold, the base station needs to try a plurality of possible receiving beams, i.e., to receive the signal using a receiving beam sweeping method. If the beam reciprocity on the base station side holds, the base station may determine a corresponding receiving beam from the transmitting beam. The UE has determined an associated SSB before sending the preamble, and a transmitting beam of the associated SSB is a candidate for determining the receiving beam of the base station. However, at this time, the UE has not notified the base station of the associated SSB corresponding to the sent preamble. The solution given by NR is to establish an association relationship among a subset of ROs, a preamble, and an SSB, and after the UE detects one SSB, the UE selects an RO and a preamble from a subset of ROs and a preamble which are associated with that SSB. The RO and the preamble selected by the UE implicitly indicate the SSB detected by the UE. When the base station detects a specific preamble on a specific physical random access channel (Physical random access channel, PRACH) resource, the base station may then determine a receiving beam with a transmitting beam of an SSB associated thereto.

The definition of an association period of SSB-to-RO mapping is that at least one round of SSB-to-RO mapping is completed in the period, so that each SSB actually sent is mapped to at least one RO, and the association period of the SSB-to-RO mapping is an integer multiple of a PRACH configuration period and the multiple is the smallest value among the values listed in Table 1 below. The association period starts from system frame 0.After one round of SSB-to-RO mapping is completed within one association period, the next round of mapping continues until remaining ROs are not enough to complete one round of SSB-to-RO mapping. If the remaining ROs are not enough to complete one round of SSB-to-RO mapping, these remaining ROs are a set of invalid ROs. All ROs in the set of invalid ROs cannot be associated to an SSB and cannot be used for PRACH transmission. Since the number of valid ROs contained in one association period of the SSB-to-RO mapping is variable under some configuration conditions, the NR protocol further defines a time-domain repetition period of the association period of the SSB-to-RO mapping by means of an association pattern period. The maximum value of the association pattern period of the SSB-to-RO mapping is 160 milliseconds.

**Table 1 (Correspondence between the PRACH configuration period and the association period of the SSB-to-RO mapping)**

| PRACH configuration period (milliseconds) | Association period of SSB-to-RO mapping (multiple of the PRACH configuration period) |
|---|---|
| 10 | {1, 2, 4, 8, 16} |
| 20 | {1, 2, 4, 8} |
| 40 | {1, 2, 4} |
| 80 | {1,2} |
| 160 | {1} |

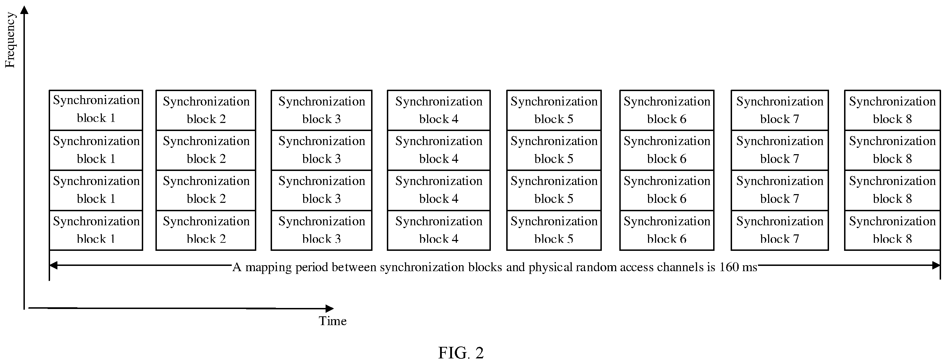

The association relationship of the SSB-to-RO mapping supports one-to-one, many-to-one and one-to-many cases. One-to-one mapping is applied to scenarios where an SSB period is moderate and the total numbers of SSBs and ROs in an association period are relatively close; many-to-one mapping is applied to scenarios where the SSB period is relatively short and the number of SSBs is larger than the number of ROs in the association period; and one-to-many mapping is applied to scenarios where the SSB period is relatively long and the number of SSBs is smaller than the number of Ros in the association period. A specific mapping rule is as follows: the UE reads higher layer parameters and obtains two parameters *N* and *R*, where *N* denotes the number of SSBs associated with one RO; and *R* denotes the number of consecutive preambles for contention-based random access corresponding to each SSB. For a contention-based random access process, the order of mapping SSB indexes to RO indexes is as follows: first, ranking in ascending order of preamble indexes within one RO; second, ranking in ascending order of frequency resource indexes for a plurality of frequency-division-multiplexed ROs; third, in increasing order of time resource indexes for time-division-multiplexed ROs within one PRACH time slot; and fourth, ranking in ascending order of indexes of PRACH time slots. FIG. 2 is an example in which SSBs are associated with ROs.

Since the UE defaults to an SSB transmission period of 20 ms, an actual transmission period of the base station is normally 5 ms, 10 ms, or 20 ms. Dense SSBs as well as periodic system information blocks (SIB, System Information Block) may lead to SSBs being sent even when there is no data being sent from the network side, resulting in the network side not being able to sleep and save power. 3GPP started the research on network energy saving in ReI-18, in which an SSB-less scheme was proposed, and the main idea is that the base station side sends a sparse SSB, for example, the SSB period is significantly larger than 160 ms, or directly does not send SSBs in a current cell. When the network side is configured with a sparse SSB for the current cell, the UE encounters severe challenges in implementing a random access process based on the sparse SSB, and it may be difficult to realize random access, resulting in the inability to perform signal transmission with the base station.

In response to the above problem, the present disclosure provides a signal transmission method and apparatus, and a medium, based on a current UE random access solution that supports network-side energy consumption reduction of a sparse SSB, and further, the network side sends SIB signaling on a first cell (the first cell), or the network side sends the SIB signaling on the first cell and a cell group (a first cell group) to configure the first cell group with a random access channel (Random access channel, RACH) resource, a message2 transmission resource, a message4 transmission resource, a messageB transmission resource, and cell information of an SSB associated with an RACH resource on the cell group, to ensure access performance of the UE under a sparse SSB.

The technical solutions in the embodiments of the present disclosure will be clearly and completely described below in combination with the drawings in the embodiments of the present disclosure, and obviously, the embodiments described are only a part of the embodiments of the present disclosure, and not all of the embodiments. Based on the embodiments in the present disclosure, all other embodiments obtained by a person of ordinary skill in the art without making creative labor fall within the protection scope of the present disclosure.

### Embodiment 1

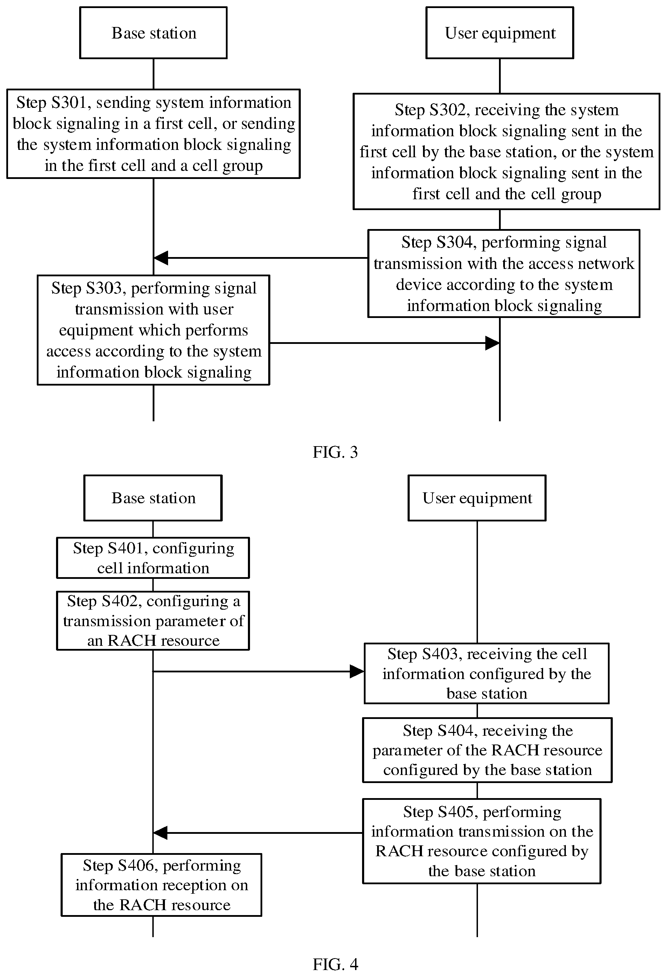

FIG. 3 is an interaction diagram of a signal transmission method provided by an embodiment of the present disclosure. The method can be applied to an access network device or a network device, for example, the base station as described above, and taking the base station being an execution subject as an example, as shown in FIG. 3, the method specifically includes following steps.

Step S301, sending system information block signaling in a first cell, or sending the system information block signaling in the first cell and a cell group, where the system information block signaling includes configuration information for access by user equipment in the first cell and/or the cell group, and the cell group includes other cells except the first cell. It should be noted that in the present disclosure, the system information block signaling is SIB signaling, the first cell is the first cell, and the cell group is a first cell group, and in order to unify expressions, all subsequent expressions herein are made with SIB signaling instead of system information block signaling, the first cell instead of the first cell, and the first cell group instead of the cell group.

In the present embodiment, the base station configures relevant configuration information for the first cell group across cells via the SIB signaling, and for example, configuration information in the SIB signaling may include at least one of the following: an RACH resource of the first cell group, an information transmission resource of the first cell group, or cell information of a synchronization block associated with the RACH resource of the first cell group. Further, the information transmission resource includes configuration resources for message 2/physical access response (Random Access Response, RAR), message4/contention resolution message, and a search space/CORESET of message B.

The base station needs to complete configuration of cell information before sending the SIB signaling. For example, FIG. 4 is an interaction diagram of a signal transmission method provided by an embodiment of the present disclosure, and in the present embodiment, the base station side configures the RACH resource for the first cell group via the SIB signaling across cells. As shown in FIG. 4, steps performed on the base station side include following steps. Step S401, configuring cell information. Step S402, configuring a transmission parameter of an RACH resource. Step S406, performing information reception on the RACH resource. Steps performed on a UE side include following steps. Step S403, receiving the cell information configured by the base station. Step S404: receiving the parameter of the RACH resource configured by the base station. Step S405, performing information transmission on the RACH resource configured by the base station.

In step S401, the base station needs to first configure the cell information, and for example, the cell information includes cell information of the first cell and the first cell group. The first cell group includes other cells except the first cell.

In the present embodiment, the cell information configured by the base station specifically may include at least one of following information: an SSB of the first cell; a control resource set (Control Resource Set, CORESET) #0 of the first cell; a search space #0 of the first cell; an SIB of the first cell; an SSB of the first cell group; a CORESET #0 of the first cell group; a search space #0 of the first cell group; or an SIB of the first cell group. For example, SIB signaling of the first cell may be specifically classified into first SIB signaling and second SIB signaling, and the first SIB signaling and the second SIB signaling include different configuration information. For example, the first SIB signaling includes configuring an RACH resource of the first cell, configuring an RACH resource of the first cell group, and the second SIB signaling includes configuring an RACH resource of the first cell group.

For example, taking the configured RACH resource of the first cell group being associated with the SSB of the first cell as an example, the SIB signaling sent from the base station side may include explicitly indicated configuration information and implicitly indicated configuration information, where the explicitly indicated configuration information may explicitly indicate an identification corresponding to SSBs associated with ROs of the first cell group (e.g., a physical cell identifier (Physical Cell Identifier, PCI) / a call control identity number (Call Control Identity document, CC ID) / a secondary cell identity number (Secondary Cell Identity document, Scell ID) / a secondary first-cell-group identity number (Secondary Cell group Identity document, Scell group ID)).

Further, the PCI/CC ID/Scell ID/Scell group ID corresponding to the SSBs associated with the ROs of the first cell group may be implicitly indicated in the SIB signaling sent from the base station side by means of the implicitly indicated configuration information. The base station side configures RO occasions for the first cell group via the SIB signaling across cells, and the RO occasions are associated with a sparse SSB of a second cell in the first cell group. In addition, the base station side configures an information transmission resource for the first cell group via the SIB signaling across cells, and at least one of transmission resources for message 2/RAR, message4/contention resolution message, or a search space/CORESET of message B in the information transmission resource is associated with a normal SSB of the first cell.

Step S303, performing signal transmission with user equipment which performs access according to the SIB signaling.

In the present embodiment, after the UE's random access, the base station may determine, based on the configuration information in the SIB signaling, a transmission and reception position of the RACH resource configured for the first cell and/or the first cell group, and the base station receives, according to the transmission and reception position of the RACH resource configured for the first cell and/or the first cell group, information transmitted by the UE. Specifically, the base station may perform, based on the transmission and reception position of the RACH resource, reception of message1.

For example, the base station side may configure information transmission resources for message2, message4, and messageB, and perform transmission of the message2, the message4, and the messageB on the configured resources. The UE then receives the information transmission resources configured by the base station for the message2, the message4 and the messageB, and performs reception of the message2, the message4 and the messageB.

In the present embodiment, the random access includes a four-step RACH and a two-step RACH, and in the four-step RACH, the message1 includes information of the random access preamble; the message2 includes a random access response; the message3 includes an RRC request; and the message4 includes contention resolution. The two-step RACH includes messageA and messageB. The messageA includes a preamble and data, for example, a UE ID and a small data packet. The messageB includes at least one of a random access response or conflict resolution, for example, a ring access protocol identity number (Ring Access Protocol Identity document, RAP ID), a cell radio network temporary identifier (Cell Radio Network Temporary Identifier, C-RNTI), and TA command. The message1 and the message3 may correspond to the messageA; and the message2 and the message4 may correspond to the messageB.

For example, the RACH resource includes a time-domain resource and a frequency-domain resource, where the time-domain resource includes a physical random access channel time-domain resource configuration index, a period, a system frame number, a subframe/time slot number, and a starting symbol and a number of random access occasions within a time slot, and the frequency-domain resource includes a number of different physical random access channel frequency-domain resources which are frequency-division-multiplexed on a same time-domain resource.

In the embodiment of the present disclosure, by sending the SIB signaling in the first cell or sending the SIB signaling in the first cell and the first cell group, to configure the first cell and/or the first cell group with information used for random access of the user equipment, access performance of the UE under a sparse SSB can be improved on the basis of reducing energy consumption of the base station.

### Embodiment 2

In the present embodiment, the configuration information in the SIB signaling includes at least one of the following: configuration information of a cell, configuration information of an RACH resource, or configuration information of an information transmission resource. The cell here may be the first cell and/or the first cell group.

In the present embodiment, the configuration information of the cell may include both explicit indication and implicit indication. For example, explicitly indicated configuration information of the cell includes cell information of the first cell and cell information of the first cell group, where cell information may specifically include a cell identification, a synchronization block SSB of the cell, a control resource set CORESET #0 of the cell; a search space #0 of the cell; and an SIB of the cell. Specifically, taking the cell classified into the first cell and the first cell group as an example, configuration information of the cell includes at least one of the following information: an SSB of the first cell; a COREST #0 of the first cell; a search space #0 of the first cell; an SIB of the first cell; an SSB of the first cell group; a CORESET #0 of the first cell group; a search space #0 of the first cell group; or SIB transmission of the first cell group. When the cell information is to be configured, configuration may be performed based on at least one of the following: a normal SSB, a normal CORESET #0, a normal search space #0, a normal SIB, a sparse SSB, a sparse CORESET #0, a sparse search space #0, or a sparse SIB. For example, implicitly indicated configuration information of the cell may include flag information of the cell information of the first cell (e.g., an identifier of the first cell) and flag information of the cell information of the first cell group (e.g., an identifier of the first cell group, and/or an identifier of a second cell in the cell group).

The normal SSB includes at least one of the following: ○,1 a configuration of an SSB supported in the R17 protocol, e.g., a period of the SSB is supported to be 20 ms, 40 ms, 80 ms, 160 ms; ○,2 a number of beams of an SSB, e.g., supported to be 2, 4, 8, 16, 32, 64; ○,3 a configuration of an RMSI associated with an SSB; and ○,4 a configuration of a resource of an RACH associated with an SSB; or ○,5 a configuration of paging associated an SSB.

The normal CORESET#0 includes at least one of the following: ○,1 a configuration of a CORESET #0 supported in the R17 protocol, e.g., a time-frequency resource of the CORESET #0: a number of time-domain symbols, and a number of frequency-domain resource blocks (Resource Block, RB); and a configured number of tag control information (Tag Control Information, TCI) of the CORESET #0, e.g., 2, 4, 8, 16, 32, and 64 are supported.

The normal search space #0 includes at least one of the following: ○,1 a configuration of a search space #0 supported in the R17 protocol, e.g., a period of the search space #0 is supported to be 2OFDMs, 4OFDMs, 1 ms, 2 ms. The normal SIB includes at least one of the following: ○,1 a configuration of an SIB supported in the R17 protocol, e.g., a type of the SIB: SIB1, SIB2, SIB3, SIB4, SIB5, SIB6, SIB7, SIB8, SIB9, SIB10, SIB11, SIB12, SIB13, SIB14, SIB15, SIB16, SIB16, SIB17, SIB18, SIB19, SIB20, SIB21; and a parameter configuration of a time-domain position of the SIB.

The sparse SSB includes at least one of the following: ○,1 an SSB parameter is configured to be part of parameters defined in the R17 protocol; ○,2 a configuration of a target SSB beyond those defined in the R17 protocol; ○,3 at least one configuration of an RMSI associated with an SSB; ○,4 at least one configuration of a resource of an RACH associated with an SSB; or ○,5 at least one configuration of paging associated with an SSB. For example, a parameter of the sparse SSB configures a period, for example, under an idle state (RRC idle), a default SSB period is 20 ms, and under configuration of the sparse SSB, an SSB period may be configured to be 160 ms under RRC idle; and for another example, under RRC connected, a default SSB period is 160 ms, and then under configuration of the sparse SSB, an SSB period may be configured to be 320 ms under RRC connected. For example, a parameter of the sparse SSB configures that only one beam is configured for example in the first cell.

The sparse CORESET #0 includes at least one of the following: ○,1 at least one configuration of a CORESET #0 supported in the R17 protocol, e.g., a time-frequency resource of the CORESET#0; for a number of time-domain symbols which is a first parameter, R17 supports *M* configurations, and the sparse CORESET #0 supports *N* configurations, where *N* is less than or equal to M, and for a number of TCI configurations of the CORESET #0 which is a second parameter, R17 supports *X* configurations, and the sparse CORESET #0 supports *Y* configurations, where *Y* is less than or equal to *X*; and a configuration of the CORESET #0 supported in the R17 protocol includes *K* items, and a configuration of the sparse CORESET #0 includes *L* items, where *L* is less than or equal to *K.*

The sparse search space #0 includes at least one of the following: ○,1 at least one configuration of a search space #0 supported in the R17 protocol, e.g., a time-frequency domain resource of a search space #0: for a number of time-domain symbols which is a third parameter, R17 supports *m* configurations, and the sparse search space #0 supports *n* configurations, where *n* is less than or equal to *m,* and for a number of TCI configurations of the search space #0 which is the second parameter, R17 supports x configurations, and the sparse search space #0 supports y configurations, where y is less than or equal to *x*; and a configuration of the search space #0 supported in the R17 protocol includes *k* items, and a configuration of the sparse search space #0 includes *h* items, where *h* is less than or equal to *k.*

The sparse SIB includes at least one of the following: ○,1 at least one of a configuration of an SIB supported in the R17 protocol, e.g., a time-frequency domain resource of the sparse SIB: for a number of time-domain symbols which is a fifth parameter, the R17 supports *P* configurations, and the sparse SIB supports *Q* configurations, wherein *P* is less than or equal to *Q*; for a number of TCI configurations of the sparse SIB which is a sixth parameter, the R17 supports *R* configurations, and the sparse SIB supports S configurations, where *R* is less than or equal to *S*; and the configuration of the SIB supported by the R17 protocol includes *A* items, and a configuration of the sparse SIB includes *B* items, where *A* is less than or equal to *B.*

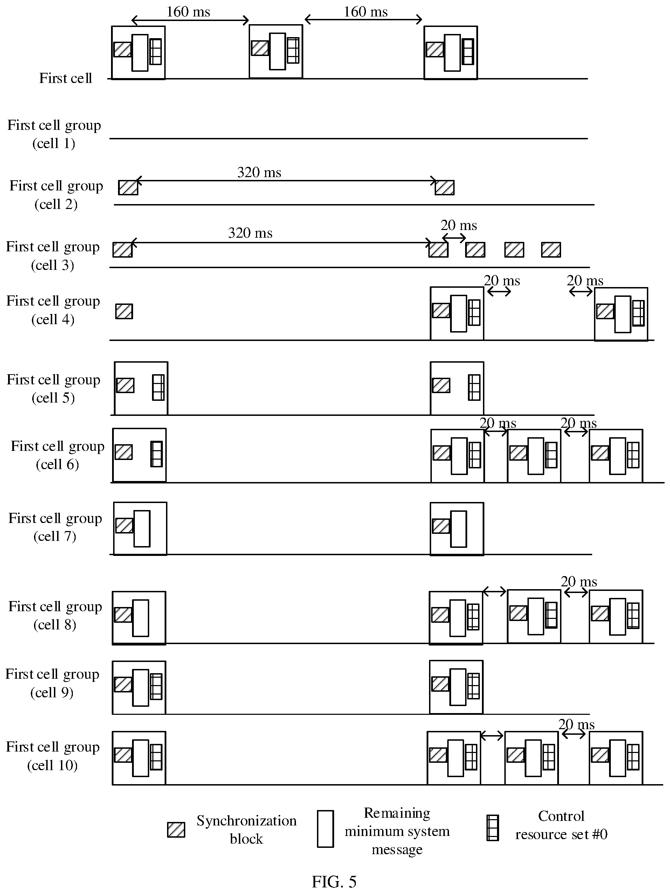

For example, FIG. 5 is a cell configuration diagram provided by an embodiment of the present disclosure, and as shown in FIG. 5, configuration information of a cell includes at least one of following modes. Mode ○,1: the first cell is configured with a normal CORESET #0, a normal search space #0, a normal SIB, and a normal SSB. Mode ○,2: the first cell group is not configured with an SSB, a CORESET #0, a search space #0, an SIB, and an SSB. Mode ○,3: the first cell group is configured with a sparse SSB. Mode ○,4: the first cell group is configured with a sparse COREST #0, a sparse SIB and at least one of the following: a normal SSB, a normal CORESET #0, a normal search space #0, a normal SIB; a sparse SSB, a sparse CORESET #0, a sparse search space #0, or a sparse SIB. Mode ○,5: the first cell group is configured with a normal CORESET #0, a normal search space #0, a normal SSB, a normal SIB and at least one of the following: a normal SSB, a normal CORESET #0, a normal search space #0, a normal SIB; a sparse SSB, a sparse CORESET #0, a sparse search space #0, or a sparse SIB.

In the present embodiment, the base station further needs to configure an RACH transmission parameter, i.e., configuration information of an RACH resource. The RACH transmission parameter includes at least an RACH resource, and for specific contents included in the RACH resource, please refer to in the embodiment 1 described above. The base station configures an RACH parameter of the first cell, and the RACH parameter of the first cell is transmitted via first SIB signaling of the first cell. The SIB signaling of the first cell may be carried on a COREST#0 of the first cell, or may be carried on a search space#0 of the first cell.

In addition, the base station further needs to configure SIB signaling, and the SIB signaling includes at least one of the following: the first SIB signaling of the first cell, or second SIB signaling of the first cell; transmission contents contained in the first SIB signaling and the second SIB signaling are different; parameter configurations transmitted by the first SIB signaling and the second SIB signaling are different; and resource positions transmitted by the first SIB signaling and the second SIB signaling are different. The first SIB signaling of the first cell includes an RACH resource configured for the first cell and an RACH resource configured for the first cell group; and the second SIB signaling of the first cell includes an RACH parameter configured for the first cell group.

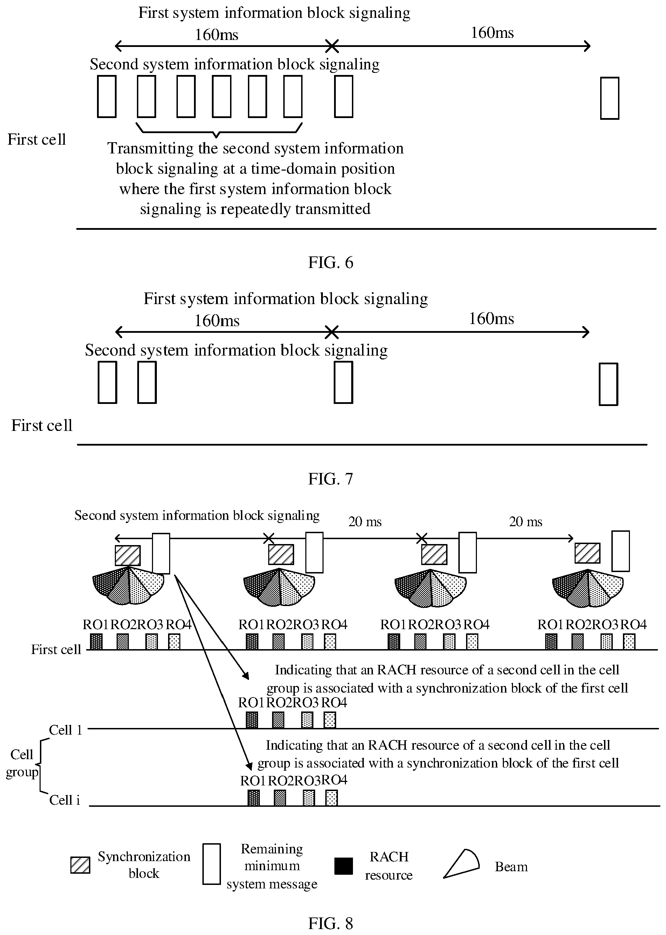

SIB signaling of the first cell is carried on at least one of: a first CORESET #0 of the first cell, a second CORESET #0 of the first cell; a search space #0 of the first cell, or a second search space #0 of the first cell. The SIB signaling of the first cell includes at least one of: second SIB signaling configured at a time-domain position where the first SIB signaling is repeatedly transmitted; or other signaling types of the second SIB signaling that are different from the first SIB signaling. For example, FIG. 6 is a diagram of first SIB signaling and second SIB signaling provided by an embodiment of the present disclosure, and as shown in FIG. 6, the second SIB signaling is transmitted at a time-domain position where the first SIB signaling is repeatedly transmitted. FIG. 7 is a diagram of first SIB signaling and second SIB signaling provided by another embodiment of the present disclosure, and as shown in FIG. 7, the second SIB signaling is different from the first SIB signaling in types. An RACH parameter of the first cell group is transmitted in the SIB signaling of the first cell, and the base station configures an RACH resource of the first cell group: a cell of an SSB associated with the RACH resource in the first cell group is configured to be the first cell.

In the present embodiment, the configuration information of the information transmission resource includes configuration information of message2, configuration information of message4, and a transmission resource of messageB. In addition, the configuration information of the information transmission resource may further include association information of a synchronization block. For example, the association information may be that at least one of the configuration information of the message2, the configuration information of the message4, or configuration information of the messageB, is associated with a normal synchronization block of the first cell.

In the embodiment of the present disclosure, by adding configuration information of a cell, configuration information of an RACH resource, and configuration information of an information transmission resource in SIB signaling, and performing information configuration for the first cell group across cells via the SIB signaling, normal transmission of message1, message2, message4, and messageB can be realized, ensuring access performance of the user equipment in the first cell group under a sparse SSB.

### Embodiment 3

In the present embodiment, each of the configuration information of the cell, the configuration information of the RACH resource, and the configuration information of the information transmission resource includes at least one of explicitly indicated configuration information or implicitly indicated configuration information. The explicitly indicated configuration information includes at least one of the following: explicitly indicated configuration information of the cell; explicitly indicated configuration information of the RACH resource; or explicitly indicated configuration information of the information transmission resource; and the implicitly indicated configuration information includes at least one of the following: implicitly indicated configuration information of the cell; implicitly indicated configuration information of the RACH resource; or implicitly indicated configuration information of the information transmission resource.

In the present embodiment, the explicitly indicated configuration information serves to explicitly indicate the configuration information of the cell, the configuration information of the RACH resource, and the configuration information of the information transmission resource. For example, the explicitly indicated configuration information may be in plaintext form; and the implicitly indicated configuration information serves to implicitly indicate the configuration information of the cell, the configuration information of the RACH resource, and the configuration information of the information transmission resource. The implicitly indicated configuration information may be in a form of a byte identifier. For example, the explicitly indicated configuration information of the cell includes cell information of the first cell and cell information of the first cell group, and the cell information of the first cell and the cell information of the first cell group may include a synchronization block SSB of the cell, a control resource set CORESET #0 of the cell, a search space #0 of the cell; and an SIB of the cell. Both the explicitly indicated configuration information and the implicitly indicated configuration information are carried via SIB signaling, to configure the first cell group by the SIB signaling across cells.

The configuration information of the RACH resource in the explicitly indicated configuration information may include an RACH resource of the first cell and an RACH resource of the first cell group, and association information of an RACH, where, for example, the association information may include synchronization block information, and the synchronization block information may include a cell of a synchronization block (e.g., the first cell or the first cell group), a sparse synchronization block, or a normal synchronization block. The configuration information of the information transmission resources includes configuration information of the message2, the message4 and the messageB as mentioned above, which can be specifically classified into configuration information of the message2, the message4 and the messageB of the first cell and a transmission resource of the first cell group. The association information of the information transmission resource may be associated synchronization block information, and specifically may include a cell of a synchronization block (e.g., the first cell or the first cell group), a sparse synchronization block, or a normal synchronization block.

The configuration information of the RACH resource in the implicitly indicated configuration information may be a byte identifier. For example, the byte identifier may include bit 0 and bit 1. Bit 0 indicates that an RACH resource of the first cell is not to be applied to the first cell group, and bit 1 indicates that the RACH resource of the first cell is to be applied to the first cell group. The association information of the RACH resource may include associated synchronization block information, and specifically, the association information of the RACH resource may also be in a form of a byte identifier. For example, bit 0 or bit 1 may be used to indicate whether the RACH resource is associated with a normal synchronization block or a sparse synchronization block. The implicitly indicated configuration information of the information transmission resource may also include a byte identifier, which, for example, may be used to indicate whether the configuration information of the message2, the message4 and the messageB of the first cell is applied to the first cell group. The implicitly indicated association information of the information transmission resource may include synchronization block information, and specifically, the synchronization block information may also be in a form of a byte identifier. For example, bit 0 or bit 1 may be used to indicate whether configuration information of the message2, the message4 and the messageB of the first cell group is associated with a normal synchronization block or a sparse synchronization block.

In the embodiment of the present disclosure, by providing the explicitly indicated configuration information and the implicitly indicated configuration information, a multidimensional expression of information can be realized, and by configuring the RACH resource of the first cell group across cells via SIB signaling, the access performance of the UE is improved, and the random access of the UE in the first cell group under a sparse SBB is realized.

### Embodiment 4

The explicitly indicated configuration information of the cell includes at least one of the following: cell information of the first cell; or cell information of the first cell group. The explicitly indicated configuration information of the RACH resource includes at least one of the following: configuration information of the RACH resource; or association information of the RACH resource. The explicitly indicated configuration information of the information transmission resource includes at least one of the following: configuration information of the information transmission resource; or association information of the information transmission resource.

The implicitly indicated configuration information of the cell includes at least one of the following: flag information of the cell information of the first cell; or flag information of the cell information of the first cell group. The implicitly indicated configuration information of the RACH resource includes at least one of the following: flag information of the RACH resource; or flag information of the association information of the RACH resource. The implicitly indicated configuration information of the information transmission resource includes at least one of the following: flag information of the information transmission resource; or flag information of the associated information of the information transmission resource.

In the present embodiment, in the explicitly indicated configuration information of the cell, the cell information of the first cell, the cell information of the first cell group, the RACH resource, the association information of the RACH resource, the configuration information of the information transmission resource, and the association information of the information transmission resource may all be in plaintext form. In the implicitly indicated configuration information, the flag information of the cell information of the first cell, the flag information of the cell information of the first cell group, the flag information of the RACH resource, the flag information of the association information of the RACH resource, the flag information of the information transmission resource, and the flag information of the association information of the information transmission resource are in a form of a byte identifier.

For example, in the explicitly indicated configuration information, the configuration information of the RACH includes at least one of the following: an RACH resource of the first cell group or an RACH resource of the second cell; the association information of the RACH resource includes synchronization block information, cell information, and control resource set information which are associated with the RACH resource. For example, the association information of the RACH resource specifically includes at least one of the following: cell information of a synchronization block associated with the RACH resource of the first cell group, or cell information of a synchronization block associated with the RACH resource of the second cell.

In the present embodiment, the cell information associated with the RACH resource of the first cell may indicate that the RACH resource of the first cell is to be applied to the first cell group or not, and the RACH resource of the first cell group may be applied to the second cell or not. For example, following modes may be specifically included. Mode 2-1: *N* bits indicate an ID/index of the first cell group to which the RACH resource of the first cell may be applied; and mode 2-2: *N* bits indicate an ID/index of the first cell group to which the RACH resource of the first cell may not be applied.

In the present embodiment, configuration of the cell information of the synchronization block associated with the RACH resource of the first cell group may be implemented in a following mode: mode 1, *N* bits indicate a cell identifier (e.g., a cell ID/index) associated with the RACH resource of the first cell group, and the cell identifier may be a primary cell (Primary Cell, Pcell) ID/index, a primary secondary cell (Primary Secondary Cell, PScell) ID/index, an Scell ID/index, a cell ID/index, a bandwidth part (Bandwidth Part, BWP) ID/index.

The RACH resource of the first cell group may include at least one of following information: an identifier of the first cell group, a configuration of the RACH resource of the first cell group, a configuration of a cell of an SSB associated with the RACH resource of the first cell group, an ID/index of the second cell in the first cell group, a configuration of an RACH resource corresponding to the second cell in the first cell group, or a configuration of a cell of an SSB associated with the RACH resource corresponding to the second cell in the first cell group. The cell information of the synchronization block associated with the RACH resource of the first cell group may include: a cell ID, a PCI (Physical Cell Identifier, physical cell identifier), a cell index, a BWP ID, a BWP index. Configuration of the cell information of the synchronization block associated with the RACH resource of the second cell may be realized in a following mode: mode 1: *N* bits indicate a cell ID/index associated with an RACH resource configuration of the first cell group or the second cell in the first cell group.

In the embodiment of the present disclosure, by determining specific information content of the explicitly indicated configuration information of the cell; specific content of the explicitly indicated configuration information of the RACH resource, specific content of the explicitly indicated configuration information of the information transmission resource, specific content of the implicitly indicated configuration information of the cell, specific content of the implicitly indicated configuration information of the RACH resource, specific content of the implicitly indicated configuration information of the information transmission resource, the base station is enabled to configure the first cell group with the RACH resource, configuration information of message2, configuration information of message4, configuration information of message B, and cell information of an SSB associated with the RACH resource in the first cell group by means of SIB signaling, improving the access performance of the UE.

### Embodiment 5

In the present embodiment, the configuration information of the information transmission resource includes at least one of the following: an information transmission resource of the first cell; or an information transmission resource of the first cell group. The information transmission resource includes configuration information of a first message, configuration information of a second message, and configuration information of a third message;
association information of the information transmission resource includes at least one of the following: synchronization block information associated with the information transmission resource; cell information associated with the information transmission resource; or control resource set information associated with the information transmission resource.

In the present embodiment, at least one of the configuration information of the first message, the configuration information of the second message, or the configuration information of the third message is associated with synchronization block information of the first cell, where the first message, the second message, and the third message are the message 2/RAR, message4/contention resolution message, the configuration information of the search space/CORESET of the message B, where 1 bit may be used to indicate whether configuration resource of message 2/RAR, message4/ contention resolution message, a search space/CORESET of message B of the first cell group is associated with an SSB of the first cell. Examples are as follows: bit 0 indicates that the configuration information of the message 2/RAR, the message4/contention resolution message, the search space/CORESET of the message B of the first cell group is not associated with an SSB of a Pcell; and bit 1 indicates that the configuration information of the message 2/RAR, the message4/ contention resolution message, the search space/CORESET of the message B of the first cell group is associated with the SSB of the first cell.

Additionally, 1 bit may also be used to indicate whether the configuration information of the message 2/RAR, the message4/ contention resolution message, the search space/CORESET of the message B of the first cell group is associated with an SSB of the second cell in the first cell group. Examples are as follows: bit 0 indicates that the configuration resource of the message 2/RAR, the message4/ contention resolution message, the search space/CORESET of the message B of the first cell group is not associated with the SSB of the second cell in the first cell group; and bit 1 indicates that the configuration resource of the message 2/RAR, the message4/ contention resolution message, the search space/CORESET of the message B of the first cell group is associated with the SSB of the second cell in the first cell group.

Additionally, *N* bits may also be used to indicate a cell ID/index associated with the configuration resource of the message 2/RAR, the message4/ contention resolution message, the search space/CORESET of the message B of the first cell group, where the cell ID/index may be at least one of a Pcell, a PScell, or a Scell.

In the embodiment of the present disclosure, by determining a cell of a synchronization block associated with the information transmission resource of the first cell group through synchronization block information associated with the information transmission resource, the access performance of the UE can be improved.

### Embodiment 6

In the present embodiment, the flag information of the RACH resource includes at least one of the following: whether the RACH resource of the first cell is applied to the first cell group; whether the RACH resource of the first cell is applied to the second cell in the first cell group; or whether the RACH resource of the first cell group is applied to the second cell of the first cell group.

The flag information of the association information of the RACH resource includes at least one of the following: whether the RACH resource of the first cell group is associated with the synchronization block information of the first cell; whether the RACH resource of the first cell group and/or the RACH resource of the second cell is associated with a normal synchronization block and a priority of the normal synchronization block, the normal synchronization block including at least one of: a configuration of a synchronization block supported in a preset protocol, a configuration of remaining minimum system information associated with a synchronization block, a configuration of an RACH resource associated with a synchronization block, or a configuration of paging associated with a synchronization block; or whether the RACH resource of the first cell group and/or the RACH resource of the second cell is associated with a sparse synchronization block, the sparse synchronization block including at least one of: synchronization block parameters being configured as partial parameters defined in a preset protocol, a configuration of a target SSB which is beyond definition by the preset protocol, a configuration of remaining minimum system information associated with a synchronization block, a configuration of an RACH resource associated with a synchronization block, or a configuration of paging associated with a synchronization block.

In the present embodiment, the flag information of the RACH resource may specifically be used to indicate whether the RACH resource of the first cell is applied to the first cell group. For example, the flag information may specifically be bit 0 or bit 1.Bit 0 indicates that the RACH resource of the first cell is not applied to the first cell group; and bit 1 indicates that the RACH resource of the first cell is applied to the first cell group. Similarly, the flag information of the RACH resource may also be used specifically to indicate whether the RACH resource of the first cell is applied to the second cell in the first cell group. Examples are as follows: bit 0: the RACH resource of the first cell is applied to the second cell in the first cell group; and bit 1: the RACH resource configured for the first cell is not applied to the second cell in the first cell group.

The flag information of the association information of the RACH resource may specifically include one of following modes. Mode 1, indicating whether the RACH resource of the first cell group or the RACH resource of the second cell in the first cell group is associated with a normal SSB, and specifically, the normal SSB may be located in the first cell or may be located in the first cell group. One normal SSB is configured in this mode. Mode 2, indicating whether an RACH resource of a cell in the first cell group first cell group is associated with a normal SSB and a priority of the associated normal SSB. The normal SSB may be located in the first cell or may be located in the first cell group; at least one normal SSB is configured in this mode; further, if a plurality of normal SSBs are configured at the same time, priorities of associated normal SSBs are defined. For example, a normal SSB in the first cell is associated by a first priority; a normal SSB in the first cell group is associated by a second priority; and a normal SSB in the second cell in the first cell group is associated by a third priority. Further, the first priority is higher than the second priority, and the second priority is higher than the third priority. Mode 3, indicating whether the RACH resource of the second cell in the first cell group first cell group is associated with a sparse SSB. The sparse SSB may be configured in the first cell group or the second cell in the first cell group; and at least one sparse SSB is configured in this mode. The sparse SSB includes at least one of the following: SSB parameters being configured as partial parameters defined in the R16 protocol, a configuration of a target SSB which is beyond definition by the R16 protocol, at least one configuration of RMSI associated with an SSB, at least one configuration of an RACH resource associated with an SSB, or at least one configuration of paging associated with an SSB; and for example, a sparse SSB parameter configures a period, for example, under RRC idle, a default SSB period is 20 ms, and under configuration of the sparse SSB, an SSB period may be configured to be 160 ms under RRC idle; and for another example, under RRC connected, a default SSB period is 160 ms, and then under configuration of the sparse SSB, an SSB period may be configured to be 320 ms under RRC connected. For example, the sparse SSB parameter may be configured in the first cell with only one beam configured. If a plurality of sparse SSBs are configured at the same time, priorities of associated sparse SSBs are defined; for example, a sparse SSB in the first cell is associated by a first priority; a sparse SSB in the first cell group is associated by a second priority; and a sparse SSB in the second cell in the first cell group is associated by a third priority. Further, the first priority is higher than the second priority, and the second priority is higher than the third priority. Mode 4, 1 bit indicates whether an RACH resource configuration of a cell in the first cell group is associated with an SSB of the first cell: an example is as follows: bit 0: the RACH resource configuration of the cell in the first cell group is not associated with the SSB of the first cell; and bit 1: the RACH resource configuration of the cell in the first cell group is associated with the SSB of the first cell.

In the embodiment of the present disclosure, by utilizing the flag information of the RACH resource and the flag information of the association information of the RACH resource, determination can be made as to whether the RACH resource of the first cell is applied to the first cell group and the second cell in the first cell group, as well as an SSB associated with the RACH resource of the first cell group and the second cell, which can improve the access performance of the UE.

### Embodiment 7

In the present embodiment, the flag information of the information transmission resource includes: whether the information transmission resource of the first cell is applied to the first cell group.

The flag information of the association information of the information transmission resource includes: whether the information transmission resource of the first cell group is associated with the synchronization block information of the first cell; whether the information transmission resource of the first cell group is associated with a normal synchronization block and a priority of the normal synchronization block, the normal synchronization block including at least one of: a configuration of a synchronization block supported in a preset protocol, a configuration of remaining minimum system information associated with a synchronization block, a configuration of an RACH resource associated with a synchronization block, or a configuration of paging associated with a synchronization block; and whether the information transmission resource of the first cell group is associated with a sparse synchronization block, the sparse synchronization block including at least one of: synchronization block parameters being configured as partial parameters defined in a preset protocol, a configuration of a target SSB which is beyond definition by the preset protocol, a configuration of remaining minimum system information associated with a synchronization block, a configuration of an RACH resource associated with a synchronization block, or a configuration of paging associated with a synchronization block.

In the present embodiment, the information transmission resource may include the configuration information of the message 2/RAR, the message4/contention resolution message, the search space/CORESET of the message B as mentioned above, where the flag information mentioned in the present embodiment may be a byte identifier. For example, 1 bit may be used to indicate whether configuration resources of message 2/RAR, message4/ contention resolution message, a search space/CORESET of message B configured in the first cell are applied to the first cell group. Examples are as follows: bit 0 indicates that the configuration resources of the message 2/RAR, the message4/ contention resolution message, the search space/CORESET of the message B configured for the first cell are applied to the first cell group; and bit 1 indicates that the configuration resources of the message 2/RAR, the message4/ contention resolution message, the search space/CORESET of configured for the first cell are not applied to the first cell group. Additionally, *N* bits may also be used to indicate an ID/index of the first cell group to which the configuration resources of the message 2/RAR, the message4/contention resolution message, the search space/CORESET of the message B configured for the first cell are applied, and *N* bits may also be used to indicate an ID/index of the first cell group to which the configuration resources of the message 2/RAR, the message4/ contention resolution message, the search space/CORESET of the message B configured for the first cell are not applied.

In the present embodiment, following information may be indicated by the flag information of the association information of the information transmission resource. ○,1 whether the configuration information of the message 2/RAR, the message4/contention resolution message, and the search space/CORESET of the message B of the first cell group is associated with an SSB of the first cell. ○,2 Indicating whether the configuration information of the message 2/RAR, the message4/contention resolution message, and the search space/CORESET of the message B of the first cell group is associated with a normal SSB, and a priority of the associated normal SSB. The normal SSB may be located in the first cell or may be located in the first cell group; if a plurality of normal SSBs are configured at the same time, priorities of associated normal SSBs are defined; for example, a normal SSB in the first cell is associated by a first priority; a normal SSB in the first cell group is associated by a second priority. ○,3 Indicating whether the configuration information of the message 2/RAR, the message4/contention resolution message, and the search space/CORESET of the message B of the first cell group is associated with a sparse SSB; and the sparse SSB may be configured in the first cell group.

In the embodiment of the present disclosure, by indicating whether the information transmission resource of the first cell is applied to the first cell group with the flag information of the information transmission resource, and indicating an associated synchronization block with the flag information of the association information of the information transmission resource, random access of the UE can be realized, and the access performance of the UE can be improved.

### Embodiment 8

In the present embodiment, SIB signaling includes at least one of: first SIB signaling, second SIB signaling, third SIB signaling, or fourth SIB signaling; where the first SIB signaling is used to configure an RACH resource of the first cell and to configure an RACH resource of the first cell group;
the second SIB signaling is used to configure an RACH resource of the first cell group;
the third SIB signaling is used to configure a random channel access resource of the second cell in the first cell group; and
the fourth SIB signaling is used to configure random channel access resources of other cells except the second cell in the first cell group.

In the present embodiment, the base station further needs to configure the SIB signaling, the SIB signaling including at least one of the following: first SIB signaling of the first cell, second SIB signaling of the first cell, third SIB signaling of the first cell group, or fourth SIB signaling of the first cell group. Transmission contents contained in the first SIB signaling and the second SIB signaling are different; parameter configurations transmitted by the first SIB signaling and the second SIB signaling are different; and resource positions transmitted by the first SIB signaling and the second SIB signaling are different; the first SIB signaling of the first cell includes an RACH resource configured for the first cell and an RACH resource configured for the first cell group; and the second SIB signaling of the first cell includes an RACH parameter configured in the first cell group; SIB signaling of the first cell is carried on at least one of the following: a first CORESET #0 of the first cell, a second CORESET #0 of the first cell; a search space #0 of the first cell, or a second search space #0 of the first cell; the SIB signaling of the first cell includes at least one of the following: second SIB signaling configured at a time-domain position where the first SIB signaling is repeatedly transmitted; or other signaling types of the second SIB signaling that are different from the first SIB signaling. The SIB signaling of the first cell transmits an RACH parameter of the first cell group, and the base station configures an RACH resource of the first cell group: a cell of an SSB associated with the RACH resource in the first cell group is configured to be the first cell.

In the present embodiment, transmission contents contained in the third SIB signaling and the fourth SIB signaling are different; parameter configurations transmitted by the third SIB signaling and the fourth SIB signaling are different; and resource positions transmitted by the third SIB signaling and the fourth SIB signaling are different; the third SIB signaling of the first cell group contains an RACH resource configured for the second cell of the first cell group; the fourth SIB signaling of the first cell group contains RACH resources configured for other cells except the second cell in the first cell group; SIB signaling of the first cell group is carried on at least one of the following: a third CORESET #0 of the second cell in the first cell group, a fourth CORESET #0 of the second cell in the first cell group, a third search space#0 of the second cell in the first cell group, or a fourth search space#0 of the second cell in the first cell group. The SIB signaling of the first cell group includes at least one of the following: a fourth SIB signaling configured at time-domain position where the third SIB signaling is repeatedly transmitted; or other signaling types different from the third SIB signaling. The SIB signaling of the first cell group transmits an RACH parameter of the first cell group, and the base station configures an RACH resource of the first cell group: a cell of an SSB associated with the RACH resource in the first cell group is configured to be the second cell in the first cell group.

In the embodiment of the present disclosure, by configuring the SIB signaling, configuration information of the message2, configuration information of the message4, configuration information of the messageB, and cell information of an SSB associated with the RACH resource in the first cell group are configured for the first cell group across cells, which further improves access performance of a cell while ensuring reduced energy consumption of the base station.

### Embodiment 9

For example, continuing to refer to FIG. 3 described above, a signal transmission method is provided in the present embodiment, which is applied to a user equipment UE side, and taking the UE being an execution subject as an example, the signal transmission method includes following steps. Step S302, receiving the SIB signaling sent in the first cell by the base station, or the SIB signaling sent in the first cell and the first cell group. The first cell group includes other cells except the first cell, and the SIB signaling includes configuration information for UE in the first cell and/or the first cell group to perform access. Step S304, according to the SIB signaling, performing signal transmission with an access network device.

For example, the configuration information may include at least one of the following: configuration information of a cell, configuration information of an RACH resource, or configuration information of an information transmission resource. The configuration information of the cell includes the cell information of the first cell and the cell information of the first cell group as mentioned above. The configuration information of the RACH resource includes the explicitly indicated configuration information and the implicitly indicated configuration information as mentioned above, where the explicitly indicated configuration information may explicitly indicate an RACH resource and synchronization block information associated with the RACH resource, and the implicitly indicated configuration information includes flag information of an RACH resource of the first cell group and flag information of synchronization block information associated with the RACH resource. The configuration information of the information transmission resource includes an information transmission resource and synchronization block information associated with the information transmission resource, where the information transmission resource may be classified into configuration information of a first message (i.e., message 2), configuration information of a second message (message 4), and configuration information of a third message (message B).

For example, the information transmission resource includes the configuration information of the first message, the configuration information of the second message, and the configuration information of the third message, and at least one of the configuration information of the first message, the configuration information of the second message, or the configuration information of the third message is associated with the synchronization block information of the first cell.

For example, the RACH resource described above includes a time-domain resource and a frequency-domain resource, where the time-domain resource includes a physical random access channel time-domain resource configuration index, a period, a system frame number, a subframe/time slot number, a starting symbol and a number of random access occasions within a time slot, and the frequency-domain resource includes a number of different physical random access channel frequency-domain resources which are frequency-division-multiplexed on a same time-domain resource.

In the present embodiment, the base station side configures the cell information, the RACH resource, the information transmission resource via SIB signaling and configures, across cells, the first cell group with the RACH resource, the configuration information of the message2, the configuration information of the message4, the configuration information of the messageB, and the cell information of the SSB associated with the RACH resource in the first cell group. The UE side receives the cell information and the RACH resource configured by the base station, and may perform transmission of message1 on the RACH resource configured by the base station. At the same time, the UE may further receive the configuration information of the message2, the message4, the messageB configured by the base station, and perform reception of the message 2, the message 4, the message B on resources of the message 2 message, the message 4, and the message B message that the base station sends.

In the embodiment of the present disclosure, by configuring the RACH resource, the configuration information of the message2, the configuration information of the message4, and the configuration information of the messageB for the first cell group by the base station, normal access of the UE can be realized for a case where a cell is not configured with an SSB, a CORESET #0,or an SIB, or is configured with a sparse SSB, CORESET #0, and SIB, to ensure the access performance of the UE in a case where power consumption of the base station is reduced.

### Embodiment 10

For example, continuing to refer to FIG. 4, steps performed at the UE side include the following. Step S403, receiving cell information configured by the base station. Step S404, receiving an RACH resource configured by the base station. Step S405, performing information transmission on the RACH resource configured by the base station. The information transmission performed after the UE receives the RACH resource configured by the base station may include transmission of message 1.

Further, for example, the UE may further receive an information transmission resource configured by the base station, specifically including configuration information of message 2, message4 and messageB, and while performing the information transmission, the UE may perform reception of the message 2, the message4 and the messageB on the configuration information of the message 2, the message4 and the messageB.

In the embodiment of the present disclosure, by configuring, across cells, the cell information, the RACH resource, and the information transmission resources by the base station, normal transmission of message2, message4, and messageB can still be performed in a case where a cell is not configured with an SSB, a CORESET #0, or an SIB or is configured with a sparse SSB, CORESET #0, and SIB, which ensures the access performance of the UE.

### Embodiment 11

For example, continuing to refer to FIG. 4, in the present embodiment, the base station side configures an RACH resource for the first cell group across cells via SIB signaling, where cell information of a synchronization block associated with the RACH resource of the first cell group may be configured to be at least one of the first cell or the second cell in the first cell group. In the present embodiment, a cell of the SSB associated with the RACH resource of the first cell group being the first cell is taken as an example. As shown in FIG. 4, steps performed at the base station side includes: step S401, configuring the cell information; step S402, configuring a transmission parameter of an RACH resource; step S406, performing information reception on the RACH resource. The steps performed at the UE side include: step S403, receiving the cell information configured by the base station; step S404, receiving the parameter of the RACH resource configured by the base station; step S405, performing information transmission on the RACH resource configured by the base station. In step S401, the base station needs to first configure the cell information, and for example, the cell information includes the first cell and the first cell group. The first cell group includes other cells except the first cell.

In the present embodiment, the explicitly indicated configuration information may explicitly indicate an RACH parameter of the first cell group, specifically including indicating at least one of following information: an identifier of the first cell group, a configuration of the RACH resource of the first cell group, a configuration of the cell of the synchronization block associated with the RACH resource of the first cell group, an identifier of the second cell in the first cell group, a configuration of an RACH resource of the second cell, or a configuration of a cell of a synchronization block associated with the RACH resource of the second cell.

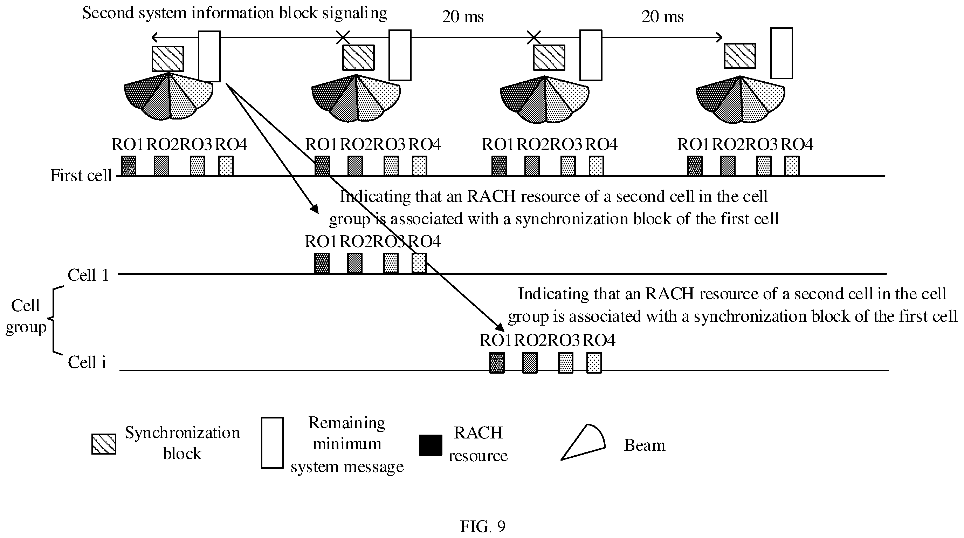

Further, the configuration of the cell of the SSB associated with the RACH resource of the first cell group and the configuration of the cell of the SSB associated with the RACH resource corresponding to the second cell in the first cell group include at least one of the following modes. Mode 1-1: *N* bits indicate a cell ID/index associated with an RACH resource configuration corresponding to the first cell group/second cell in the first cell group. The cell ID/index may be the first cell, or the second cell in the first cell group. For example, FIG. 8 is a diagram indicating RACH resource association of a first cell group provided by an embodiment of the present disclosure. FIG. 9 is a diagram indicating RACH resource association of a first cell group provided by another embodiment of the present disclosure. As shown in FIGS. 8 and 9, for the RACH resource configuration of the first cell group, in an example of the association of an RACH resource of the second cell in the cell group, the second cell in the first cell group, as indicated by the first cell, may be configured with same or different RACH resources.

Further, the configuration of the RACH resource of the first cell group and the configuration of the cell of the SSB associated with the RACH resource configuration corresponding to the second cell in the first cell group may further include an SIB explicit indication of whether the RACH resource configured for the first cell is applied to the first cell group or the second cell in the first cell group. The SIB explicit indication specifically includes following modes.

Mode 2-1, 1 bit in SIB signaling indicates whether cell information of an associated SSB of an RACH parameter configured for a cell is applied to the first cell group or the second cell in the first cell group, where a wave includes the first cell and the second cell in the first cell group; the SIB signaling includes first SIB signaling of the first cell, second SIB signaling of the first cell, third SIB signaling of the first cell group, and fourth SIB signaling of the first cell group.

For example, an 1-bit indication example is: bit 0: the cell information of the associated SSB of the RACH parameter configured for the cell is applied to the first cell group, or to the second cell in the first cell group, correct; and bit 1: the cell information of the associated SSB of the RACH parameter configured for the cell is not applied to the first cell group or to the second cell in the first cell group, incorrect. An N-bit indication example is: indicating that at least one RACH resource of the first cell is applied to the first cell group or the second cell in the first cell group.

Mode 2-2: *N* bits indicate an ID/index of the first cell group or the second cell in the first cell group to which the RACH resource configured for the first cell can be applied.

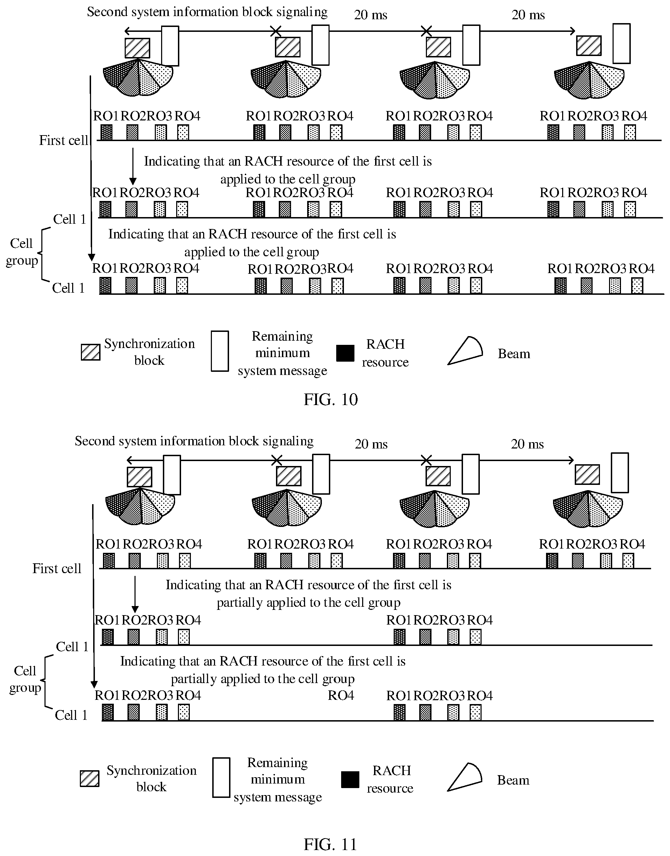

Mode 2-3: *N* bits indicate an ID/index of the first cell group or the second cell in the first cell group to which the RACH resource configured for the first cell cannot be applied. For example, FIG. 10 is a diagram indicating whether RACH resources of the first cell are applied to the first cell group provided by an embodiment of the present disclosure, and FIG. 11 is a diagram indicating whether RACH resources of the first cell are applied to the first cell group provided by another embodiment of the present disclosure.

Further, in some other implementations, the SIB signaling may implicitly indicate the RACH parameter of the first cell group, including indicating at least one of following information: the configuration of the RACH resource of the first cell group, or the configuration of the cell of the SSB associated with the RACH resource configuration corresponding to the second cell in the first cell group, and an SIB implicit indication may further be included, including at least one of the following. Mode 3-1: indicating whether the RACH resource of the first cell group, or an RACH configuration of the second cell in the first cell group is associated with a normal SSB. The normal SSB may be located in the first cell, or may be located in the first cell group; one normal SSB is configured in this mode. Mode 3-2: indicating whether an RACH configuration of the first cell group or a cell in the first cell group is associated a normal SSB, and a priority of the associated normal SSB; the normal SSB may be located in the first cell, or may be located in the first cell group; at least one normal SSB is configured in this mode. If a plurality of normal SSBs are configured at the same time, priorities of associated normal SSBs are defined. For example, a normal SSB in the first cell is associated by a first priority; a normal SSB in the first cell group is associated by a second priority; the second cell in the first cell group is associated by a third priority; and further, the first priority is higher than the second priority, and the second priority is higher than the third priority. Mode 3-3: indicating whether the RACH configuration of the first cell group or the second cell in the first cell group is associated with a sparse SSB; the sparse SSB may be configured in the first cell group, or the second cell in the first cell group; at least one sparse SSB is configured in this mode. The sparse SSB includes at least one of the following: SSB parameters being configured as partial parameters defined in the R16 protocol; a configuration of a target SSB which is beyond definition by the R16 protocol; at least one configuration of RMSI associated with an SSB; at least one configuration of an RACH resource associated with an SSB; or at least one configuration of paging associated with an SSB; and for example, a sparse SSB parameter configures a period, for example, under RRC idle, a default SSB period is 20 ms, and under configuration of the sparse SSB, an SSB period may be configured to be 160 ms under RRC idle; and for another example, under RRC connected, a default SSB period is 160 ms, and then under configuration of the sparse SSB, an SSB period may be configured to be 320 ms under RRC connected. For example, the sparse SSB parameter is configured, for example, in the first cell with only one beam configured. If a plurality of sparse SSBs are configured at the same time, priorities of associated sparse SSBs are defined; for example, a sparse SSB in the first cell is associated by a first priority; a sparse SSB in the first cell group is associated by a second priority; and a sparse SSB in the second cell in the first cell group is associated by a third priority; and further, the first priority is higher than the second priority, and the second priority is higher than the third priority. Mode 3-4: 1 bit indicates whether an RACH resource configuration corresponding to a cell is associated with an SSB of the first cell: for example, an 1-bit indication example is as follows: bit 0 indicates that the RACH resource configuration corresponding to the cell is not associated with the SSB of the first cell, incorrect; and bit 1: indicating that the RACH resource configuration corresponding to the cell is associated with the SSB of the first cell, correct. Mode 3-5: 1 bit indicates whether the RACH resource configured for the first cell is applied to the first cell group, or the second cell in the first cell group; where a 1-bit indication example is that: bit 0 indicates that the RACH resource configured for the first cell is applied to the first cell group, or the second cell in the first cell group, correct; and bit 1: the RACH resource configured for the first cell is not applied to the first cell group, or the second cell in the first cell group, incorrect.

Further, in some other implementations, the SIB signaling may also explicitly indicate the RACH parameter of the first cell group, where the SIB signaling explicitly indicating the RACH parameter of the first cell group includes indicating at least one of following information: in the RACH parameter of the first cell group, at least one of following information is identified: cell information, cell information of an SSB associated with the RACH resource of the first cell group, or cell information of an SSB associated with the RACH resource of the second cell in the first cell group. The cell information includes at least one of the following: a cell ID, a PCI, a cell index, a cell ID, a cell index, a BWP ID, or a BWP index.

In step S402 of the present embodiment, when the base station configures the RACH transmission parameter, the RACH transmission parameter includes at least one of following cases: an RACH resource, including a time-frequency domain resource of RACH transmission, where the RACH time-domain resource includes: a PRACH time-domain resource configuration index, and further includes a period, a system frame number, a subframe/time slot number, a starting symbol and a number of ROs within a time slot; and the frequency-domain resource includes: a number of different PRACH frequency-domain resources which are frequency-division-multiplexed on a same time-domain resource. The configuring the RACH transmission parameter by the base station includes configuring an RACH parameter of the first cell and an RACH parameter of the first cell group. The RACH parameter of the first cell is transmitted via the first SIB signaling of the first cell; the first SIB signaling of the first cell is carried on a CORESET #0 of the first cell; and SIB signaling of the first cell is carried on a search space #0 of the first cell.

In step S406 of the present embodiment, the base station performs reception of message1 according to a configured transmission and reception position of the RACH resource. Random access includes a four-step RACH and a two-step RACH, where in the four-step RACH, message1 includes information of a random access preamble; message2 includes a random access response; message3 includes an RRC request; and message4 includes contention resolution. The two-step RACH includes message A and message B, where the message A includes a preamble and data, for example, a UE ID, an SR, and a small data packet; and the message B includes at least one of a random access response or conflict resolution, for example, an RAP ID, a TA command, and a C-RNTI. The message1 and the message3 may correspond to the message A; and the message2 and the message4 may correspond to the message B.

In the embodiment of the present disclosure, by configuring, across cells, the cell information of the SSB associated with the RACH resource of the first cell group via an SIB of the first cell, the first cell group can acquire RO information of the RACH resource and realize the random access of the UE without an SIB configured, or even without an SSB configured.

### Embodiment 12

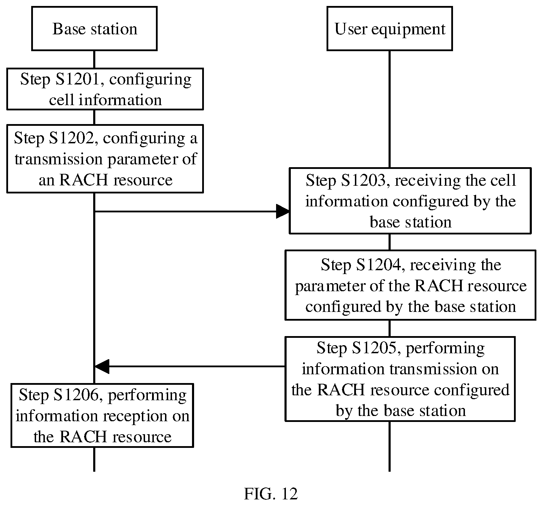

FIG. 12 is an interaction diagram of a signal transmission method provided by another embodiment of the present disclosure, and in the present embodiment, the base station side configures an RACH resource for the first cell group across cells via SIB signaling, and a cell of an SSB associated with the RACH resource of the first cell group is configured to be the second cell in the first cell group. As shown in FIG. 12, steps performed at the base station side include: step S1201, configuring cell information; step S1202, configuring a transmission parameter of an RACH resource; step S1206, performing information reception on an RACH resource. Steps performed at the UE side include: step S1203, receiving the cell information configured by the base station; step S1204, receiving the parameter of the RACH resource configured by the base station; step S1205, performing information transmission on the RACH resource configured by the base station.

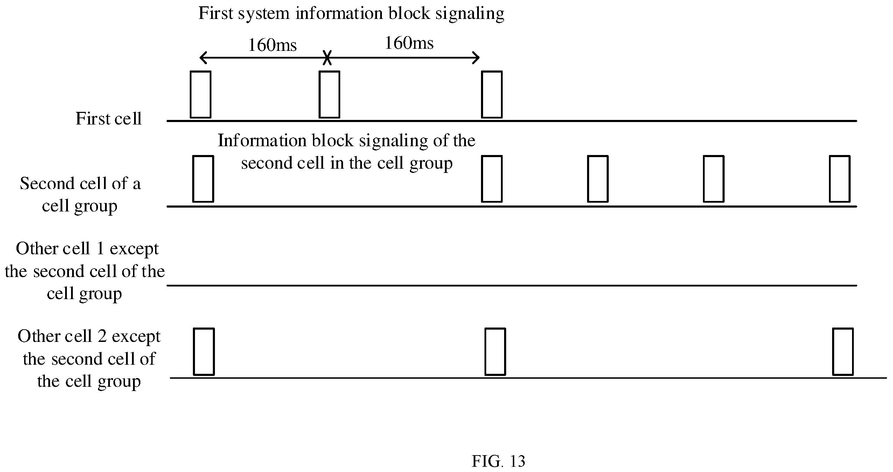

In the present embodiment, the SIB signaling configured by the base station includes the first SIB signaling of the first cell and the second SIB signaling of the first cell in the above embodiments, and further includes SIB signaling of the first cell group at the same time, where the SIB signaling of the first cell group includes at least one of the following: third SIB signaling of the first cell group or fourth SIB signaling of the first cell group; transmission contents contained in the third SIB signaling and the fourth SIB signaling are different; parameter configurations transmitted by the third SIB signaling and the fourth SIB signaling are different ; and resource positions transmitted by the third SIB signaling and the fourth SIB signaling are different; the third SIB signaling of the first cell group contains an RACH resource configured for the second cell in the first cell group; the fourth SIB signaling of the first cell group contains RACH resources configured for other cells except the second cell in the first cell group; the SIB signaling of the first cell group is carried on at least one of the following: a third CORESET #0 of the second cell in the first cell group, a fourth CORESET #0 of the second cell in the first cell group, a third search space #0 of the second cell in the first cell group, or a fourth search space #0 of the second cell in the first cell group. The SIB signaling of the first cell group includes at least one of the following: fourth SIB signaling configured at a time-domain position where the third SIB signaling is repeatedly transmitted; or other signaling types that are different from the third SIB signaling. FIG. 13 is a diagram of third SIB signaling and fourth SIB signaling provided by an embodiment of the present disclosure. As shown in FIG. 13, the SIB signaling of the first cell group transmits an RACH parameter of the first cell group, and the base station configures an RACH resource of the first cell group: a cell of an SSB associated with the RACH resource in the first cell group is configured to be the second cell in the first cell group.

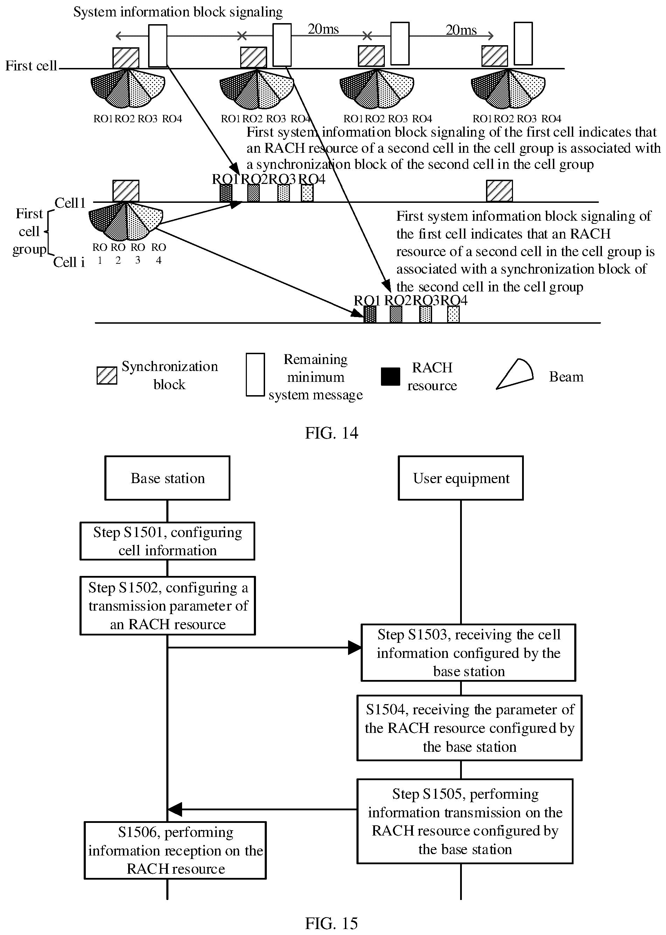

Specifically, in some implementations, the SIB signaling explicitly indicating the RACH parameter of the first cell group includes following modes. Mode 1-1: 1 bit indicates whether a RACH resource configuration corresponding to a cell is associated with an SSB of the second cell in the first cell group. A 1-bit indication example is: bit 0: the RACH resource configuration corresponding to the cell is not associated with the SSB of the first cell group, incorrect; and bit 1: the RACH resource configuration corresponding to the cell is associated with the SSB of the first cell group, correct. Mode 1-2. *N* bits indicate cell IDs or cell indexes associated with RACH resource configurations corresponding to the first cell group and the second cell in the first cell group; the cell IDs or the cell indexes may be the first cell and the second cell in the first cell group. For example, FIG. 14 is a diagram indicating RACH resource association of a first cell group provided by an embodiment of the present disclosure. The SIB signaling contains at least one of: first SIB signaling of the first cell, second SIB signaling of the first cell, third SIB signaling of the first cell group, or fourth SIB signaling of the first cell group.

Further, the configuration of the RACH resource of the first cell group and the configuration of the cell of the SSB associated with the RACH resource configuration corresponding to the second cell in the first cell group may further include an SIB explicit indication of whether the cell information of the associated SSB of the RACH parameter configured for the first cell is applied to the first cell group or the second cell in the first cell group. Following modes are specifically included. Mode 2-1: 1 bit in SIB signaling indicates whether cell information of an associated SSB of an RACH parameter configured for a cell is applied to the first cell group or the second cell in the first cell group; where the cell includes the first cell and the second cell in the first cell group; the SIB signaling includes the first SIB signaling of the first cell, the second SIB signaling of the first cell, the third SIB signaling of the first cell group, and the fourth SIB signaling of the first cell group. A 1-bit indication example is: bit 0 indicates that the cell information of the associated SSB of the RACH parameter configured for the cell is applied to the first cell group, or to the second cell in the first cell group, correct; and bit 1 indicates that the cell information of the associated SSB of the RACH parameter configured for the cell is not applied to the first cell group or to the second cell in the first cell group, incorrect. An N-bit indication example is: indicating that cell information of an associated SSB of at least one RACH parameter of the cell is applied to the first cell group or the second cell in the first cell group. Mode 2-2: N bits indicate an ID of the first cell group or the second cell in the first cell group to which the cell information of the associated SSB of the RACH parameter configured for the cell can be applied and an index of the second cell. Mode 2-3: N bits indicate an ID/index of the first cell group or the second cell in the first cell group to which the cell information of the associated SSB of the RACH parameter configured for the cell cannot be applied.

In other embodiments, the SIB signaling may implicitly indicate the RACH parameter of the first cell group, including indicating at least one of following information.

A configuration of the RACH resource of the first cell group, the configuration of the cell of the SSB associated with the RACH resource configuration corresponding to the second cell in the first cell group, may further include an SIB implicit indication, including at least one of following modes. Mode 3-1: indicating whether the RACH configuration of the first cell group or the RACH configuration of the second cell in the first cell group is associated with a normal SSB, where the normal SSB may be located in the first cell or may be located in the first cell group; one normal SSB is configured in this mode. Mode 3-2: indicating whether an RACH configuration of the first cell group or a cell in the first cell group is associated with a normal SSB and a priority of the associated normal SSB. The normal SSB may be located in the first cell or may be located in the first cell group, and at least one normal SSB is configured in this mode, and if a plurality of normal SSBs are configured at the same time, priorities of associated normal SSBs are defined. For example, a normal SSB in the first cell is associated by a first priority; a normal SSB in the first cell group is associated by a second priority; and the second cell in the first cell group is associated by a third priority. Further, the first priority is higher than the second priority, and the second priority is higher than the third priority. Mode 3-3: indicating whether the RACH configuration of the first cell group, or the second cell in the first cell group is associated with a sparse SSB; the sparse SSB may be configured in the first cell group or the second cell in the first cell group; at least one sparse SSB is configured in this mode; if a plurality of sparse SSBs are configured at the same time, priorities of associated sparse SSBs are defined. For example, a sparse SSB in the first cell is associated by a first priority; a sparse SSB in the first cell group is associated by a second priority; a sparse SSB in the second cell in the first cell group is associated by a third priority; further, the first priority is higher than the second priority, and the second priority is higher than the third priority.

In some other embodiments, the SIB signaling may also explicitly indicate the RACH parameter of the first cell group, where the SIB signaling explicitly indicating the RACH parameter of the first cell group includes indicating at least one of following information: in the RACH parameter of the first cell group, at least one of following information is identified: cell information, cell information of an SSB associated with the RACH resource of the first cell group, or cell information of an SSB associated with the RACH resource of the second cell in the first cell group. The cell information includes at least one of the following: a cell ID, a PCI, a cell index, a cell ID, a cell index, a BWP ID, or a BWP index.

In the present embodiment, when the base station performs steps S1202 and S1206, processes thereof are similar to those of the embodiment 1. For specific details, please refer to the embodiment 1 described above. When the UE performs steps S1203 to S1205, processes thereof are similar to those of the embodiment 1. For specific details, please refer to the embodiment 1 described above, which will not be repeated herein.

In the embodiment of the present disclosure, by configuring the cell information of the SSB associated with the RACH resource of the first cell group across cells via an SIB of the first cell group, the first cell group can obtain RO information of the RACH resource without an SIB configured, or even without an SSB configured, and the UE can realize random access even in a case of a sparse SSB.

### Embodiment 13

FIG. 15 is an interaction diagram of a signal transmission method provided by another embodiment of the present disclosure, and in the present embodiment, the base station side configures an RACH resource for the first cell group across cells via SIB signaling, and the RACH resource of the first cell group is associated with the first cell and the first cell group. As shown in FIG. 15, steps performed at the base station side include: step S1501, configuring cell information; step S1502, configuring a transmission parameter of an RACH resource; step S1506, performing information reception on the RACH resource. Steps performed at the UE side include: step S1503, receiving the cell information configured by the base station; step S1504, receiving the parameter of the RACH resource configured by the base station; step S1505, performing information transmission on the RACH resource configured by the base station.

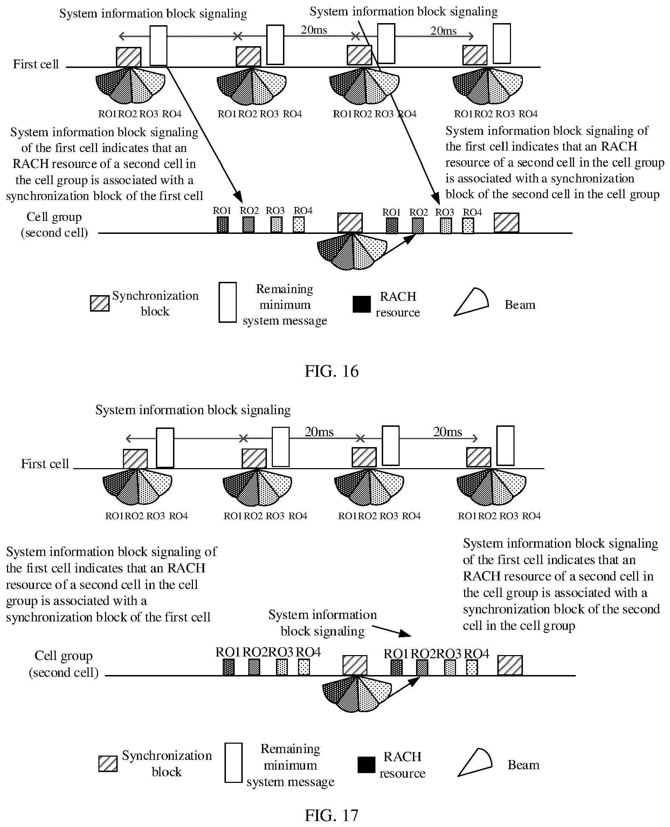

In the present embodiment, SIB signaling of the first cell indicates that an RACH resource of the first cell group may be associated with an SSB of the first cell and an SSB of the second cell in the first cell group. For example, FIG. 16 is a diagram of cell information of an SSB associated with a second cell in a first cell group provided by an embodiment of the present disclosure. As shown in FIG. 16, there is no transmission of an SSB for the second cell in the first cell group, and at this time, the SIB signaling of the first cell configures the SSB associated with the RACH resource of the second cell in the first cell group to be the SSB of the first cell; and when transmission of an SSB needs to be performed for the second cell, the SIB signaling of the first cell indicates that the SSB associated with the second cell in the first cell group is the SSB of the second cell in the first cell group.

In some other implementations, the SIB signaling of the first cell may also indicate that the RACH resource of the first cell group may be associated with an SSB of the first cell and/or the first cell group; and at the same time, an SIB of the second cell in the first cell group indicates that the RACH resource of the first cell group may be associated with an SSB of the first cell and/or the first group cell. For example, FIG. 17 is a diagram of cell information of an SSB associated with a second cell in a first cell group provided by another embodiment of the present disclosure. As shown in FIG. 17, there is no transmission of an SSB for the second cell in the first cell group, and at this time, the SIB signaling of the first cell configures the SSB associated with the RACH resource of the second cell in the first cell group to be an SSB of the first cell; and when transmission of an SSB needs to be performed for the second cell, SIB signaling of the second cell in the first cell group indicates that the SSB associated with the second cell in the first cell group is an SSB of the second cell in the first cell group.

In the present embodiment, when the base station performs steps S1501 and S1506, processes thereof are similar to those of the embodiment 1. For specific details, please refer to the embodiment 1 described above. When the UE performs steps S1503 to S1505, processes thereof are similar to those of the embodiment 1. For specific details, please refer to the embodiment 1 described above, which will not be repeated herein.

In the embodiment of the present disclosure, by configuring cell information of an SSB associated with the RACH resource of the first cell group across cells via an SIB of the first cell group when SSB transmission is configured for the first cell group, the first cell group can acquire RO information of the RACH resource without an SIB configured, or even without an SSB configured.

### Embodiment 14

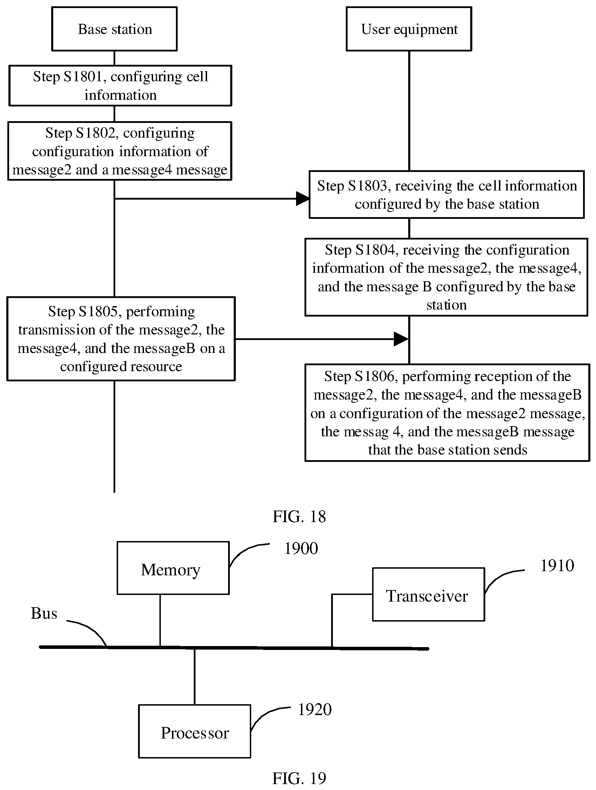

FIG. 18 is an interaction diagram of a signal transmission method provided by an embodiment of the present disclosure, and in the present embodiment, the base station side configures transmission resource information of message2 and message4 across cells and a home cell. As shown in FIG. 18, steps performed at the base station side include: step S1801, configuring cell information; step S1802: configuring configuration information of message2 and message4 message; step S1806, performing transmission of the message2, the message4, and messageB on a configured resource. Steps performed at the UE side include: step S1803, receiving the cell information configured by the base station; step S1804, receiving transmission parameters of the message2, the message4, and the message B configured by the base station; step S1805, performing reception of the message2, the message4, and the messageB on the resource of the message2 message, the message4, and the messageB message that the base station sends.

For configuration of the configuration information of the message2, the message4, and the message B message, please refer to the above embodiments. Configuration of the configuration information of the message2 message may be at least one of the schemes in the above embodiments 1, 2, and 3, configuration of the configuration information of the message4 message may be at least one of the schemes in the embodiments 1, 2, and 3, and the configuration information of the message B message may be at least one of the schemes in the embodiments 1, 2, and 3.

In the embodiment of the present disclosure, the transmission of the message2, the message4, and the message B is associated with an SSB, a CORESET #0, and an SIB configured in a cell. If configuration of an SSB, a CORESET #0, and an SIB is not performed on a part of cells, configuration information of a message cannot be determined due to the fact that cell/cell information is not carried in the transmission of the message2, the message4, and the message B, thus the transmission of the message2, the message4, and the messageB cannot be performed. In the present scheme, for a case where a cell/cell is not configured with an SSB, a CORESET #0, or an SIB or is configured with a sparse SSB, CORESET#0, and SIB, normal transmission of the message2, the message4, and the message B can be performed. The access performance of the UE is thus ensured.

### Embodiment 15

FIG. 19 is a structural diagram of a signal transmission apparatus provided by an embodiment of the present disclosure, where the signal transmission apparatus may be located in a base station, and as shown in FIG. 19, the signal transmission apparatus includes a memory 1900, a transceiver 1910, and a processor 1920. The memory 1900 is configured to store a computer program; and the transceiver 1910 is configured to send and receive data under control of the processor 1920.

In FIG. 19, a bus architecture may include any number of interconnected buses and bridges, through which various circuits, specifically one or more processors represented by the processor 1920 and a memory represented by the memory 1900, are linked together. The bus architecture may further link together various other circuits such as a peripheral, a voltage regulator, and a power management circuit, etc., which are all well known in the art and therefore will not be further described herein. A bus interface provides an interface. The transceiver 1910 may be a plurality of elements, i.e., including a transmitter and a receiver, providing units for communicating with a variety of other apparatuses on transmission media, these transmission media including, these transmission media including a wireless channel, a wired channel, a fiber optic cable, and other transmission media.

The processor 1920 is responsible for managing the bus architecture and usual processing, and the memory 1900 may store data used by the processor 1920 when performing operations.

Optionally, the processor 1920 may be a CPU (central processing unit), an ASIC (Application Specific Integrated Circuit, application specific integrated circuit), an FPGA (Field-Programmable Gate Array, field-programmable gate array), or a CPLD (Complex Programmable Logic Device, complex programmable logic device), and the processor may also have a multi-core architecture.

The processor is configured to perform any of the methods provided by the embodiments of the present disclosure in accordance with an obtained executable instruction by invoking a computer program stored in the memory. The processor and the memory may also be physically arranged separately.

In the present embodiment, the processor 1920 is configured to read the computer program in the memory and perform following operations: sending system information block signaling in a first cell, or sending the system information block signaling in the first cell and a first cell group, where the system information block signaling includes configuration information for access by user equipment in the first cell group, and the first cell group includes other cells except the first cell; and performing signal transmission with user equipment which performs access according to the system information block signaling.

Optionally, the processor, when performing the signal transmission with the user equipment which performs access according to the system information block signaling, may specifically be configured to: determine, according to the configuration information in the system information block signaling, a transmission and reception position of an RACH resource configured for the first cell and/or the first cell group; and receive, according to the transmission and reception position of the RACH resource configured for the first cell and/or the first cell group, information transmitted by the user equipment which performs access according to the system information block signaling.

Optionally, the configuration information for the access by the user equipment in the first cell and/or the cell group includes at least one of the following: configuration information of a cell, configuration information of an RACH resource, or configuration information of an information transmission resource.

Optionally, each of the configuration information of the cell, the configuration information of the RACH resource, and the configuration information of the information transmission resource includes at least one of explicitly indicated configuration information or implicitly indicated configuration information; where the explicitly indicated configuration information includes at least one of the following:
cell information of the first cell and cell information of the first cell group; an RACH resource and synchronization block information associated with the RACH resource; or an information transmission resource and synchronization block information associated with the information transmission resource; and the implicitly indicated configuration information includes at least one of the following: flag information of an RACH resource of the first cell group and flag information of synchronization block information associated with the RACH resource; or flag information of the information transmission resource and flag information of the synchronization block information associated with the information transmission resource.

Optionally, the RACH resource includes at least one of the following: the RACH resource of the first cell group, or an RACH resource of a second cell; and the synchronization block information associated with the RACH resource includes at least one of the following: cell information of a synchronization block associated with the RACH resource of the first cell group, or cell information of a synchronization block associated with the RACH resource of the second cell.

Optionally, the flag information of the RACH resource includes at least one of the following: whether the RACH resource of the first cell is applied to the first cell group, or whether the RACH resource of the first cell group is applied to the second cell in the first cell group; the flag information of the synchronization block information associated with the RACH resource includes at least one of the following: whether the RACH resource of the first cell group is associated with synchronization block information of the first cell; whether the RACH resource of the first cell group and/or the RACH resource of the second cell is associated with a normal synchronization block and a priority of the normal synchronization block, where the normal synchronization block includes at least one of: a configuration of a synchronization block supported in a preset protocol, a configuration of remaining minimum system information associated with a synchronization block, a configuration of an RACH resource associated with a synchronization block, or a configuration of paging associated with a synchronization block; or whether the RACH resource of the first cell group and/or the RACH resource of the second cell is associated with a sparse synchronization block, where the sparse synchronization block includes at least one of: synchronization block parameters being configured as partial parameters defined in a preset protocol, a configuration of a target synchronization block which is beyond definition by the preset protocol, a configuration of remaining minimum system information associated with a synchronization block, a configuration of an RACH resource associated with a synchronization block, or a configuration of paging associated with a synchronization block.

Optionally, the cell information of the synchronization block associated with the RACH resource of the first cell group includes at least one of the following: the first cell, or the second cell in the first cell group.

Optionally, the information transmission resource includes: an information transmission resource of the first cell and an information transmission resource of the first cell group; the synchronization block information associated with the information transmission resource includes at least one of the following: whether the information transmission resource of the first cell group is associated with the synchronization block information of the first cell; whether the information transmission resource of the first cell group is associated with the synchronization block information of the second cell in the first cell group; or whether the information transmission resource of the first cell group is associated with at least one of a primary cell, a primary secondary cell, or a secondary cell.

Optionally, the flag information of the information transmission resource includes: whether the information transmission resource of the first cell is applied to the first cell group; the flag information of the synchronization block information of the information transmission resource includes: whether the information transmission resource of the first cell group is associated with the synchronization block information of the first cell; whether the information transmission resource of the first cell group is associated with a normal synchronization block and a priority of the normal synchronization block, where the normal synchronization block includes at least one of: a configuration of a synchronization block supported in a preset protocol, a configuration of remaining minimum system information associated with a synchronization block, a configuration of an RACH resource associated with a synchronization block, or a configuration of paging associated with a synchronization block; and whether the information transmission resource of the first cell group is associated with a sparse synchronization block, where the sparse synchronization block includes at least one of: synchronization block parameters being configured as partial parameters defined in a preset protocol, a configuration of a target synchronization block which is beyond definition by the preset protocol, a configuration of remaining minimum system information associated with a synchronization block, a configuration of an RACH resource associated with a synchronization block, or a configuration of paging associated with a synchronization block.

Optionally, the cell information of the first cell includes at least one of the following: identification information of the first cell, the synchronization block information of the first cell, a control resource set of the first cell, a search space of the first cell, or system information block signaling of the first cell; and the cell information of the first cell group includes at least one of the following: identification information of the first cell group, the synchronization block information of the first cell group, a control resource set of the first cell group, a search space of the first cell group, or system information block signaling of the first cell group.

Optionally, the information transmission resource includes configuration information of a first message, configuration information of a second message, and configuration information of a third message, and at least one of the configuration information of the first message, the configuration information of the second message, or the configuration information of the third message is associated with the synchronization block information of the first cell.

Optionally, the RACH resource includes a time-domain resource and a frequency-domain resource, where the time-domain resource includes a physical random access channel time-domain resource configuration index, a period, a system frame number, a subframe/time slot number, and a starting symbol and a number of random access occasions within a timeslot, and the frequency-domain resource includes a number of different physical random access channel frequency-domain resources which are frequency-division-multiplexed on a same time-domain resource.

Optionally, the system information block signaling includes at least one of: first system information block signaling, second system information block signaling, third system information block signaling, or fourth system information block signaling;
where the first system information block signaling is used to configure the RACH resource of the first cell and to configure RACH resources of the first cell group;
the second system information block signaling is used to configure the RACH resource of the first cell group;
the third system information block signaling is used to configure a random channel access resource of the second cell in the first cell group; and
the fourth system information block signaling is used to configure random channel access resources of other cells except the second cell in the first cell group.

It should be noted herein that the above-mentioned apparatus provided in the present disclosure is capable of implementing all the method steps realized by the corresponding method embodiments and is capable of achieving a same technical effect, and same parts of the present embodiment as the method embodiments and beneficial effects will not be specifically repeated herein.

### Embodiment 16

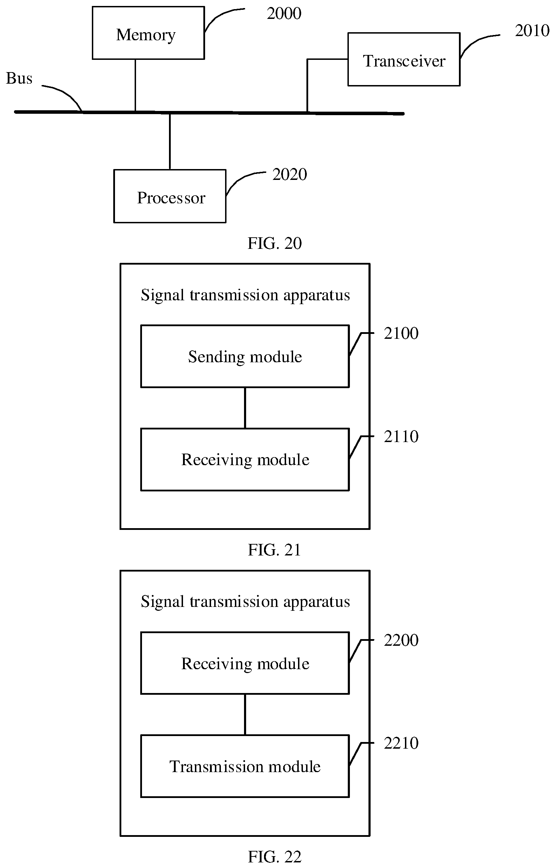

FIG. 20 is a structural diagram of a signal transmission apparatus provided by another embodiment of the present disclosure, where the signal transmission apparatus may be in user equipment, and as shown in FIG. 20, the signal transmission apparatus includes a memory 2000, a transceiver 2010, and a processor 2020: where the memory 2000 is configured to store a computer program; and the transceiver 2010 is configured to transmit and receive data under control of the processor 2020.

In FIG. 20, a bus architecture may include any number of interconnected buses and bridges, through which various circuits, specifically one or more processors represented by the processor 2020 and a memory represented by the memory 2000, are linked together. The bus architecture may further link together various other circuits such as a peripheral, a voltage regulator, and a power management circuit, etc., which are all well known in the art and therefore will not be further described herein. A bus interface provides an interface. The transceiver 2010 may be a plurality of elements, i.e., including a transmitter and a receiver, providing units for communicating with a variety of other apparatuses on transmission media, these transmission media including, these transmission media including a wireless channel, a wired channel, a fiber optic cable, and other transmission media. For different user equipment, a user interface may also be an interface capable of externally or internally connecting desired devices, and connected device includes but is not limited to a keypad, a monitor, a speaker, a microphone, a joystick, etc.

The processor 2020 is responsible for managing the bus architecture and usual processing, and the memory 2000 may store data used by the processor 2020 when performing operations.

Optionally, the processor 2020 may be a CPU (central processing unit), an ASIC (Application Specific Integrated Circuit, application specific integrated circuit), an FPGA (Field-Programmable Gate Array, field-programmable gate array), or a CPLD (Complex Programmable Logic Device, complex programmable logic device), and the processor may also have a multi-core architecture.

The processor is configured to perform any of the methods provided by the embodiments of the present disclosure in accordance with an obtained executable instruction by invoking the computer program stored in the memory. The processor and memory may also be physically arranged separately.

In the present embodiment, the processor 2020 is configured to read the computer program in the memory and perform following operations: receiving system information block signaling sent in a first cell by an access network device, or system information block signaling sent in the first cell and a first cell group, where the first cell group includes other cells except the first cell, and the system information block signaling includes configuration information for access by user equipment in the first cell group; and performing, according to the system information block signaling, signal transmission with the access network device.

Optionally, the configuration information for the access by the user equipment in the first cell and/or the cell group includes at least one of the following: configuration information of a cell, configuration information of an RACH resource, or configuration information of an information transmission resource.

Optionally, the information transmission resource includes configuration information of a first message, configuration information of a second message, and configuration information of a third message, and at least one of the configuration information of the first message, the configuration information of the second message, or the configuration information of the third message is associated with synchronization block information of the first cell.

Optionally, the processor, when performing, according to the system information block signaling, the signal transmission with the access network device, may specifically be configured to: acquire an RACH resource in the system information block signaling, and perform information transmission on the RACH resource.

Optionally, the processor, when performing, according to the system information block signaling, the signal transmission with the access network device, may specifically be configured to: receive the configuration information of the first message, the configuration information of the second message, and the configuration information of the third message; and perform information transmission on the configuration information of the first message, the configuration information of the second message, and the configuration information of the third message.

Optionally, the RACH resource includes a time-domain resource and a frequency-domain resource, where the time-domain resource includes a physical random access channel time-domain resource configuration index, a period, a system frame number, a subframe/time slot number, a starting symbol and a number of random access occasions within a time slot, and the frequency-domain resource includes a number of different physical random access channel frequency-domain resources which are frequency-division-multiplexed on a same time-domain resource.

It should be noted herein that the above-mentioned apparatus provided in the present disclosure is capable of implementing all the method steps realized by the corresponding method embodiments and is capable of achieving a same technical effect, and same parts of the present embodiment as the method embodiments and beneficial effects will not be specifically repeated herein.

### Embodiment 17

FIG. 21 is a structural diagram of a signal transmission apparatus provided by yet another embodiment of the present disclosure, where the signal transmission apparatus may be disposed in a base station, and as shown in FIG. 21, the signaling transmission apparatus includes a sending module 2100 and a receiving module 2110, where the sending module 2100 is configured to send system information block signaling in a first cell, or send the system information block signaling in the first cell and a first cell group, where the system information block signaling includes configuration information for access by user equipment in the first cell group, and the first cell group includes other cells except the first cell; and the receiving module 2110 is configured to perform signal transmission with user equipment which performs access according to the system information block signaling.

Optionally, the receiving module, when performing the signal transmission with the user equipment which performs access according to the system information block signaling, may specifically be configured to: determine, according to the configuration information in the system information block signaling, a transmission and reception position of an RACH resource configured for the first cell and/or the first cell group; and receive, according to the transmission and reception position of the RACH resource configured for the first cell and/or the first cell group, information transmitted by the user equipment which performs access according to the system information block signaling.

Optionally, the configuration information for the access by the user equipment in the first cell and/or the cell group includes at least one of the following: configuration information of a cell, configuration information of an RACH resource, or configuration information of an information transmission resource.

Optionally, each of the configuration information of the cell, the configuration information of the RACH resource, and the configuration information of the information transmission resource includes at least one of explicitly indicated configuration information or implicitly indicated configuration information; where the explicitly indicated configuration information includes at least one of the following: cell information of the first cell and cell information of the first cell group; an RACH resource and synchronization block information associated with the RACH resource; or an information transmission resource and synchronization block information associated with the information transmission resource; and the implicitly indicated configuration information includes at least one of the following: flag information of an RACH resource of the first cell group and flag information of synchronization block information associated with the RACH resource; or flag information of the information transmission resource and flag information of the synchronization block information associated with the information transmission resource.

Optionally, the RACH resource includes at least one of the following: the RACH resource of the first cell group, or an RACH resource of a second cell; and the synchronization block information associated with the RACH resource includes at least one of the following: cell information of a synchronization block associated with the RACH resource of the first cell group, or cell information of a synchronization block associated with the RACH resource of the second cell.

Optionally, the flag information of the RACH resource includes at least one of the following: whether the RACH resource of the first cell is applied to the first cell group, or whether the RACH resource of the first cell group is applied to the second cell in the first cell group; the flag information of the synchronization block information associated with the RACH resource includes at least one of the following: whether the RACH resource of the first cell group is associated with synchronization block information of the first cell; whether the RACH resource of the first cell group and/or the RACH resource of the second cell is associated with a normal synchronization block and a priority of the normal synchronization block, where the normal synchronization block includes at least one of: a configuration of a synchronization block supported in a preset protocol, a configuration of remaining minimum system information associated with a synchronization block, a configuration of an RACH resource associated with a synchronization block, or a configuration of paging associated with a synchronization block; or whether the RACH resource of the first cell group and/or the RACH resource of the second cell is associated with a sparse synchronization block, where the sparse synchronization block includes at least one of: synchronization block parameters being configured as partial parameters defined in a preset protocol, a configuration of a target synchronization block which is beyond definition by the preset protocol, a configuration of remaining minimum system information associated with a synchronization block, a configuration of an RACH resource associated with a synchronization block, or a configuration of paging associated with a synchronization block.

Optionally, the cell information of the synchronization block associated with the RACH resource of the first cell group includes at least one of the following: the first cell, or the second cell in the first cell group.

Optionally, the information transmission resource includes: an information transmission resource of the first cell and an information transmission resource of the first cell group; the synchronization block information associated with the information transmission resource includes at least one of the following: whether the information transmission resource of the first cell group is associated with the synchronization block information of the first cell; whether the information transmission resource of the first cell group is associated with a synchronization block of the second cell in the first cell group; or whether the information transmission resource of the first cell group is associated with at least one of a primary cell, a primary secondary cell, or a secondary cell.

Optionally, the information transmission resource includes: the information transmission resource of the first cell and the information transmission resource of the first cell group; the synchronization block information associated with the information transmission resource includes at least one of the following: whether the information transmission resource of the first cell group is associated with the synchronization block information of the first cell; whether the information transmission resource of the first cell group is associated with the synchronization block of the second cell in the first cell group; or whether the information transmission resource of the first cell group is associated with at least one of the primary cell, the primary secondary cell, or the secondary cell.

Optionally, the cell information of the first cell includes at least one of the following: identification information of the first cell, the synchronization block information of the first cell, a control resource set of the first cell, a search space of the first cell, and system information block signaling of the first cell; and the cell information of the first cell group includes at least one of the following: identification information of the first cell group, the synchronization block information of the first cell group, a control resource set of the first cell group, a search space of the first cell group, or system information block signaling of the first cell group.

Optionally, the information transmission resource includes configuration information of a first message, configuration information of a second message, and configuration information of a third message, and at least one of the configuration information of the first message, the configuration information of the second message, or the configuration information of the third message is associated with the synchronization block information of the first cell.

Optionally, the RACH resource includes a time-domain resource and a frequency-domain resource, where the time-domain resource includes a physical random access channel time-domain resource configuration index, a period, a system frame number, a subframe/time slot number, and a starting symbol and a number of random access occasions within a time slot, and the frequency-domain resource includes a number of different physical random access channel frequency-domain resources which are frequency-division-multiplexed on a same time-domain resource.

Optionally, the system information block signaling includes at least one of: first system information block signaling, second system information block signaling, third system information block signaling, or fourth system information block signaling; where the first system information block signaling is used to configure the RACH resource of the first cell and to configure the RACH resource of the first cell group; the second system information block signaling is used to configure the RACH resource of the first cell group; the third system information block signaling is used to configure a random channel access resource of the second cell in the first cell group; and the fourth system information block signaling is used to configure random channel access resources of other cells except the second cell in the first cell group.

In the present embodiment, the method and the apparatus are based on same application conception, and since the method and the apparatus solve the problem in a similar principle, reference may be made to each other for the implementation of the apparatus and the method, and repetitive parts will not be repeated.

### Embodiment 18

FIG. 22 is a structural diagram of a signal transmission apparatus provided by a further embodiment of the present disclosure, where the signal transmission apparatus may be disposed in user equipment, and as shown in FIG. 22, the signal transmission apparatus includes a receiving module 2200 and a transmission module 2210.

The receiving module 2200 is configured to receive system information block signaling sent in a first cell by an access network device, or system information block signaling sent in the first cell and a first cell group, where the first cell group includes other cells except the first cell, and the system information block signaling includes configuration information for access by user equipment in the first cell group. The transmission module 2210 is configured to perform, according to the system information block signaling, signal transmission with the access network device.

Optionally, the configuration information for the access by the user equipment in the first cell and/or the cell group includes at least one of the following: configuration information of a cell, configuration information of an RACH resource, or configuration information of an information transmission resource.

Optionally, the information transmission resource includes configuration information of a first message, configuration information of a second message, and configuration information of a third message, and at least one of the configuration information of the first message, the configuration information of the second message, or the configuration information of the third message is associated with synchronization block information of the first cell.

Optionally, the transmission module, when performing, according to the system information block signaling, the signal transmission with the access network device, may specifically be configured to: acquire an RACH resource in the system information block signaling, and perform information transmission on the RACH resource.

Optionally, the transmission module, when performing, according to the system information block signaling, the signal transmission with the access network device, may specifically be configured to: receive the configuration information of the first message, the configuration information of the second message, and the configuration information of the third message; and perform information transmission on the configuration information of the first message, the configuration information of the second message, and the configuration information of the third message.

Optionally, the RACH resource includes a time-domain resource and a frequency-domain resource, where the time-domain resource includes a physical random access channel time-domain resource configuration index, a period, a system frame number, a subframe/time slot number, a starting symbol and a number of random access occasions within a time slot, and the frequency-domain resource includes a number of different physical random access channel frequency-domain resources which are frequency-division-multiplexed on a same time-domain resource.

The method and the apparatus are based on same application conception, and since the method and the apparatus solve the problem in a similar principle, reference may be made to each other for the implementation of the apparatus and the method, and repetitive parts will not be repeated.

### Embodiment 19

An embodiment of the present disclosure provides a processor-readable storage medium, where the processor-readable storage medium stores a computer program, and the computer program is used to cause a processor to perform the signal transmission method provided in any of the above embodiments.

The processor-readable storage medium may be any usable medium or data storage device that the processor is able to access, including, but not limited to, a magnetic memory (e.g., a floppy disk, a hard disk, a magnetic tape, a magnetic optical disk (MO), etc.), an optical memory (e.g., a CD, a DVD, a BD, an HVD, etc.), and a semiconductor memory (e.g., a ROM, an EPROM, an EEPROM, a non-volatile memory (NAND FLASH), a solid state drive (SSD)), etc.

Those skilled in the art should understand that the embodiments of the present disclosure may be provided as methods, systems, or computer program products. Accordingly, the present disclosure may take a form of a fully hardware embodiment, a fully software embodiment, or an embodiment that combines software and hardware aspects. Further, the present disclosure may take a form of a computer program product implemented on one or more computer-usable storage media (including, but not limited to, a disk memory and an optical memory, etc.) that contain computer-usable program codes therein.

The present disclosure is described with reference to flowcharts and/or block diagrams of the methods, the devices (systems), and the computer program products according to the embodiments of the present disclosure. It should be understood that each of processes and/or blocks in the flowcharts and/or the block diagrams, and a combination of the processes and/or the blocks in the flowcharts and/or the block diagrams may be implemented by computer-executable instructions. These computer-executable instructions may be provided to a general-purpose computer, a dedicated computer, an embedded processor, or a processor of other programmable data-processing devices to produce a machine such that instructions executed by a computer or the processor of the other programmable data-processing devices produce an apparatus configured to implement functions specified in one or more processes in a flowchart and/or one or more blocks in a block diagram.

These processor-executable instructions may also be stored in a processor-readable memory capable of directing the computer or the other programmable data-processing devices to operate in a particular manner, such that instructions stored in that processor-readable memory produce a manufacture including an instruction apparatus that implements functions specified in one or more processes in a flowchart and/or one or more blocks in a block diagram.

These processor-executable instructions may also be loaded onto the computer or the other programmable data-processing devices such that a series of operational steps are performed on the computer or other programmable devices to produce computer-implemented processing, such that instructions executed on the computer or other programmable devices provide steps for implementing functions specified in one or more processes in a flowchart and/or one or more blocks in a block diagram.

Obviously, those skilled in the art may make various changes and variations to the present disclosure without departing from the spirit and scope of the present disclosure. Thus, if these changes and variations of the present disclosure are within the scope of claims in the present disclosure and technical equivalents thereof, the present disclosure is intended to encompass those changes and variations as well.

## Claims

1. A signal transmission method, **characterized by** being applied to an access network device, and comprising:
sending system information block signaling in a first cell, or sending the system information block signaling in the first cell and a cell group, wherein the system information block signaling comprises configuration information for access by user equipment in the first cell and/or the cell group, and the cell group comprises other cells except the first cell; and
performing signal transmission with user equipment which performs access according to the system information block signaling.

2. The method according to claim 1, wherein the performing signal transmission with user equipment which performs access according to the system information block signaling comprises:
determining, according to the configuration information in the system information block signaling, a transmission and reception position of a random access channel resource configured for the first cell and/or the cell group; and
receiving, according to the transmission and reception position of the random access channel resource configured for the first cell and/or the cell group, information transmitted by the user equipment which performs access according to the system information block signaling.

3. The method according to claim 1, wherein the configuration information for the access by the user equipment in the first cell and/or the cell group comprises at least one of the following: configuration information of a cell, configuration information of a random access channel resource, or configuration information of an information transmission resource.

4. The method according to claim 3, wherein the configuration information of the cell, the configuration information of the random access channel resource, and the configuration information of the information transmission resource comprise at least one of explicitly indicated configuration information or implicitly indicated configuration information;
wherein the explicitly indicated configuration information comprises at least one of the following:
explicitly indicated configuration information of the cell;
explicitly indicated configuration information of the random access channel resource; or
explicitly indicated configuration information of the information transmission resource; and
the implicitly indicated configuration information comprises at least one of the following:
implicitly indicated configuration information of the cell;
implicitly indicated configuration information of the random access channel resource; or
implicitly indicated configuration information of the information transmission resource.

5. The method according to claim 4, wherein the explicitly indicated configuration information of the cell comprises at least one of the following:
cell information of the first cell; or
cell information of the cell group;
the explicitly indicated configuration information of the random access channel resource comprises at least one of the following:
configuration information of the random access channel resource; or
association information of the random access channel resource;
the explicitly indicated configuration information of the information transmission resource comprises at least one of the following:
configuration information of the information transmission resource; or
association information of the information transmission resource;
the implicitly indicated configuration information of the cell comprises at least one of the following:
flag information of the cell information of the first cell; or
flag information of the cell information of the cell group;
the implicitly indicated configuration information of the random access channel resource comprises at least one of the following:
flag information of the random access channel resource; or
flag information of the association information of the random access channel resource; and
the implicitly indicated configuration information of the information transmission resource comprises at least one of the following:
flag information of the information transmission resource; or
flag information of the association information of the information transmission resource.

6. The method according to claim 5, wherein the configuration information of the random access channel resource comprises at least one of the following:
a random access channel resource of the first cell; or
a random access channel resource of the cell group; and
the association information of the random access channel resource comprises:
synchronization block information associated with the random access channel resource;
cell information associated with the random access channel resource; and
control resource set information associated with the random access channel resource.

7. The method according to claim 5, wherein the configuration information of the information transmission resource comprises at least one of the following:
an information transmission resource of the first cell; or
an information transmission resource of the cell group, the information transmission resource comprising configuration information of a first message, configuration information of a second message, and configuration information of a third message; and
the association information of the information transmission resource comprises at least one of the following:
synchronization block information associated with the information transmission resource;
cell information associated with the information transmission resource; or
control resource set information associated with the information transmission resource.

8. The method according to claim 5, wherein the cell information of the first cell comprises at least one of the following:
an identification of the first cell;
synchronization block information of the first cell;
control resource set information of the first cell;
a search space of the first cell; or
system information block signaling of the first cell; and
the cell information of the cell group comprises at least one of the following:
identification information of the cell group;
synchronization block information of the cell group;
a control resource set of the cell group;
a search space of the cell group; or
system information block signaling of the cell group.

9. The method according to claim 5, wherein the flag information of the cell information of the first cell comprises: an identification of the first cell; and the flag information of the cell information of the cell group comprises: an identification of the cell group, and/or an identification of a second cell in the cell group.

10. The method according to claim 5, wherein the flag information of the random access channel resource comprises at least one of the following:
whether a random access channel resource of the first cell is applied to the cell group;
whether the random access channel resource of the first cell is applied to a second cell in the cell group; or
whether a random access channel resource of the cell group is applied to the second cell in the cell group; and
the flag information of the association information of the random access channel resource comprises at least one of the following:
whether the random access channel resource of the cell group is associated with synchronization block information of the first cell;
whether the random access channel resource of the cell group and/or a random access channel resource of the second cell are associated with a normal synchronization block and a priority of the normal synchronization block; or
whether the random access channel resource of the cell group and/or the random access channel resource of the second cell are associated with a sparse synchronization block.

11. The method according to claim 5, wherein the flag information of the information transmission resource comprises:
whether an information transmission resource of the first cell is applied to the cell group; and
the flag information of the association information of the information transmission resource comprises:
whether an information transmission resource of the cell group is associated with synchronization block information of the first cell;
whether the information transmission resource of the cell group is associated with a normal synchronization block and a priority of the normal synchronization block; and
whether the information transmission resource of the cell group is associated with a sparse synchronization block.

12. The method according to claim 10 or 11, wherein the normal synchronization block comprises at least one of: a configuration of a synchronization block supported in a preset protocol, a configuration of remaining minimum system information associated with a synchronization block, a configuration of a random access channel resource associated with a synchronization block, or a configuration of paging associated with a synchronization block.

13. The method according to claim 10 or 11, wherein the sparse synchronization block comprises at least one of: synchronization block parameters being configured as partial parameters defined in a preset protocol, a configuration of a target synchronization block which is beyond definition by the preset protocol, a configuration of remaining minimum system information associated with a synchronization block, a configuration of a random access channel resource associated with a synchronization block, or a configuration of paging associated with a synchronization block.

14. The method according to any one of claims 1 to 11, wherein the system information block signaling comprises at least one of: first system information block signaling, second system information block signaling, third system information block signaling, or fourth system information block signaling;
wherein the first system information block signaling is used for configuring a random access channel resource of the first cell and for configuring a random access channel resource of the cell group;
the second system information block signaling is used for configuring the random access channel resource of the cell group;
the third system information block signaling is used for configuring a random channel access resource of a second cell in the cell group; and
the fourth system information block signaling is used for configuring random channel access resources of other cells except the second cell in the cell group.

15. The method according to any one of claims 2 to 11, wherein the random access channel resource comprises a time-domain resource and a frequency-domain resource, wherein the time-domain resource comprises a physical random access channel time-domain resource configuration index, a period, a system frame number, a subframe/time slot number, a starting symbol and a number of random access occasions within a time slot, and the frequency-domain resource comprises a number of different physical random access channel frequency-domain resources which are frequency-division-multiplexed on a same time-domain resource.

16. The method according to claim 7, wherein the first message is used for physical access response, the second message is used for contention resolution, and the third message is used for configuration of a search space.

17. An information transmission method, **characterized by** being applied to user equipment, and comprising:
receiving system information block signaling sent in a first cell by an access network device, or system information block signaling sent in the first cell and a cell group, wherein the cell group comprises other cells except the first cell, and the system information block signaling comprises configuration information for access by user equipment in the first cell and/or the cell group; and
performing, according to the system information block signaling, signal transmission with the access network device.

18. The method according to claim 17, wherein the configuration information for the access by the user equipment in the first cell and/or the cell group comprises at least one of the following: configuration information of a cell, configuration information of a random access channel resource, or configuration information of an information transmission resource.

19. The method according to claim 18, wherein the information transmission resource comprises configuration information of a first message, configuration information of a second message, and configuration information of a third message, and at least one of the configuration information of the first message, the configuration information of the second message, or the configuration information of the third message is associated with synchronization block information of the first cell.

20. The method according to claim 19, wherein the first message is used for physical access response, the second message is used for contention resolution, and the third message is used for configuration of a search space.

21. The method according to claim 17, wherein the performing, according to the system information block signaling, signal transmission with the access network device comprises:
acquiring a random access channel resource in the system information block signaling and performing information transmission on the random access channel resource.

22. The method according to claim 19, wherein the performing, according to the system information block signaling, signal transmission with the access network device comprises:
receiving the configuration information of the first message, the configuration information of the second message, and the configuration information of the third message; and
performing information transmission on the configuration information of the first message, the configuration information of the second message, and the configuration information of the third message.

23. The method according to any one of claims 18, 19, and 22, wherein the random access channel resource comprises a time-domain resource and a frequency-domain resource, wherein the time-domain resource comprises a physical random access channel time-domain resource configuration index, a period, a system frame number, a subframe/time slot number, a starting symbol and a number of random access occasions within a time slot, and the frequency-domain resource comprises a number of different physical random access channel frequency-domain resources which are frequency-division-multiplexed on a same time-domain resource.

24. A signal transmission apparatus, **characterized in that** the apparatus is disposed in an access network device, and the apparatus comprises a memory, a transceiver, and a processor:
wherein the memory is configured to store a computer program; the transceiver is configured to transmit and receive data under control of the processor; and the processor is configured to read the computer program in the memory and execute following operations:
sending system information block signaling in a first cell, or sending the system information block signaling in the first cell and a cell group, where the system information block signaling comprises configuration information for access by user equipment in the first cell and/or the cell group, and the cell group comprises other cells except the first cell; and
performing signal transmission with user equipment which performs access according to the system information block signaling.

25. The apparatus according to claim 24, wherein when performing the signal transmission with the user equipment which performs access according to the system information block signaling, the processor may specifically be configured to:
determine, according to the configuration information in the system information block signaling, a transmission and reception position of a random access channel resource configured for the first cell and/or the cell group; and
receive, according to the transmission and reception position of the random access channel resource configured for the first cell and/or the cell group, information transmitted by the user equipment which performs access according to the system information block signaling.

26. The apparatus according to claim 24, wherein the configuration information for the access by the user equipment in the first cell and/or the cell group comprises at least one of the following: configuration information of a cell, configuration information of a random access channel resource, or configuration information of an information transmission resource.

27. The apparatus according to claim 26, wherein the configuration information of the cell, the configuration information of the random access channel resource, and the configuration information of the information transmission resource comprise at least one of explicitly indicated configuration information or implicitly indicated configuration information;
wherein the explicitly indicated configuration information comprises at least one of the following:
explicitly indicated configuration information of the cell;
explicitly indicated configuration information of the random access channel resource; or
explicitly indicated configuration information of the information transmission resource; and
the implicitly indicated configuration information comprises at least one of the following:
implicitly indicated configuration information of the cell;
implicitly indicated configuration information of the random access channel resource; or
implicitly indicated configuration information of the information transmission resource.

28. The apparatus according to claim 27, wherein the explicitly indicated configuration information of the cell comprises at least one of the following:
cell information of the first cell; or
cell information of the cell group;
the explicitly indicated configuration information of the random access channel resource comprises at least one of the following:
configuration information of the random access channel resource; or
association information of the random access channel resource;
the explicitly indicated configuration information of the information transmission resource comprises at least one of the following:
configuration information of the information transmission resource; or
association information of the information transmission resource;
the implicitly indicated configuration information of the cell comprises at least one of the following:
flag information of the cell information of the first cell; or
flag information of the cell information of the cell group;
the implicitly indicated configuration information of the random access channel resource comprises at least one of the following:
flag information of the random access channel resource; or
flag information of the association information of the random access channel resource; and
the implicitly indicated configuration information of the information transmission resource comprises at least one of the following:
flag information of the information transmission resource; or
flag information of the association information of the information transmission resource.

29. The apparatus according to claim 28, wherein the configuration information of the random access channel resource comprises at least one of the following:
a random access channel resource of the first cell; or
a random access channel resource of the cell group; and
the association information of the random access channel resource comprises:
synchronization block information associated with the random access channel resource;
cell information associated with the random access channel resource; and
control resource set information associated with the random access channel resource.

30. The apparatus according to claim 28, wherein the configuration information of the information transmission resource comprises at least one of the following:
an information transmission resource of the first cell; or
an information transmission resource of the cell group, the information transmission resource comprising configuration information of a first message, configuration information of a second message, and configuration information of a third message; and
the association information of the information transmission resource comprises at least one of the following:
synchronization block information associated with the information transmission resource;
cell information associated with the information transmission resource; or
control resource set information associated with the information transmission resource.

31. The apparatus according to claim 28, wherein the cell information of the first cell comprises at least one of the following:
an identification of the first cell;
synchronization block information of the first cell;
control resource set information of the first cell;
a search space of the first cell; or
system information block signaling of the first cell; and
the cell information of the cell group comprises at least one of the following:
identification information of the cell group;
synchronization block information of the cell group;
a control resource set of the cell group;
a search space of the cell group; or
system information block signaling of the cell group.

32. The apparatus according to claim 28, wherein the flag information of the cell information of the first cell comprises: an identification of the first cell; and the flag information of the cell information of the cell group comprises an identification of the cell group, and/or an identification of a second cell in the cell group.

33. The apparatus according to claim 28, wherein the flag information of the random access channel resource comprises at least one of the following:
whether a random access channel resource of the first cell is applied to the cell group;
whether the random access channel resource of the first cell is applied to a second cell in the cell group; or
whether a random access channel resource of the cell group is applied to the second cell in the cell group; and
the flag information of the association information of the random access channel resource comprises at least one of the following:
whether the random access channel resource of the cell group is associated with synchronization block information of the first cell;
whether the random access channel resource of the cell group and/or a random access channel resource of the second cell are associated with a normal synchronization block and a priority of the normal synchronization block; or
whether the random access channel resource of the cell group and/or the random access channel resource of the second cell are associated with a sparse synchronization block.

34. The apparatus according to claim 28, wherein the flag information of the information transmission resource comprises: whether an information transmission resource of the first cell is applied to the cell group; and
the flag information of the association information of the information transmission resource comprises:
whether an information transmission resource of the cell group is associated with synchronization block information of the first cell;
whether the information transmission resource of the cell group is associated with a normal synchronization block and a priority of the normal synchronization block; and
whether the information transmission resource of the cell group is associated with a sparse synchronization block.

35. The apparatus according to claim 33 or 34, wherein the normal synchronization block comprises at least one of: a configuration of a synchronization block supported in a preset protocol, a configuration of remaining minimum system information associated with a synchronization block, a configuration of a random access channel resource associated with a synchronization block, or a configuration of paging associated with a synchronization block.

36. The apparatus according to claim 33 or 34, wherein the sparse synchronization block comprises at least one of: synchronization block parameters being configured as partial parameters defined in a preset protocol, a configuration of a target synchronization block which is beyond definition by the preset protocol, a configuration of remaining minimum system information associated with a synchronization block, a configuration of a random access channel resource associated with a synchronization block, or a configuration of paging associated with a synchronization block.

37. The apparatus according to any one of claims 24 to 34, wherein the system information block signaling comprises at least one of: first system information block signaling, second system information block signaling, third system information block signaling, or fourth system information block signaling;
wherein the first system information block signaling is used for configuring a random access channel resource of the first cell and for configuring a random access channel resource of the cell group;
the second system information block signaling is used for configuring the random access channel resource of the cell group;
the third system information block signaling is used for configuring a random channel access resource of a second cell in the cell group; and
the fourth system information block signaling is used for configuring random channel access resources of other cells except the second cell in the cell group.

38. The apparatus according to any one of claims 25 to 34, wherein the random access channel resource comprises a time-domain resource and a frequency-domain resource, wherein the time-domain resource comprises a physical random access channel time-domain resource configuration index, a period, a system frame number, a subframe/time slot number, a starting symbol and a number of random access occasions within a time slot, and the frequency-domain resource comprises a number of different physical random access channel frequency-domain resources which are frequency-division-multiplexed on a same time-domain resource.

39. The apparatus according to claim 30, wherein the first message is used for physical access response, the second message is used for contention resolution, and the third message is used for configuration of a search space.

40. A signal transmission apparatus, **characterized in that** the apparatus is disposed in user equipment, and the apparatus comprises a memory, a transceiver, and a processor:
wherein the memory is configured to store a computer program; the transceiver is configured to transmit and receive data under control of the processor; and the processor is configured to read the computer program in the memory and execute following operations:
receiving system information block signaling sent in a first cell by an access network device, or system information block signaling sent in the first cell and a cell group, wherein the cell group comprises other cells except the first cell, and the system information block signaling comprises configuration information for access by user equipment in the first cell and/or the cell group; and
performing, according to the system information block signaling, signal transmission with the access network device.

41. The apparatus according to claim 40, wherein the configuration information for the access by the user equipment in the first cell and/or the cell group comprises at least one of the following: configuration information of a cell, configuration information of a random access channel resource, or configuration information of an information transmission resource.

42. The apparatus according to claim 41, wherein the information transmission resource comprises configuration information of a first message, configuration information of a second message, and configuration information of a third message, and at least one of the configuration information of the first message, the configuration information of the second message, or the configuration information of the third message is associated with synchronization block information of the first cell.

43. The apparatus according to claim 42, wherein the first message is used for physical access response, the second message is used for contention resolution, and the third message is used for configuration of a search space.

44. The apparatus according to claim 40, wherein when performing, according to the system information block signaling, the signal transmission with the access network device, the processor is specifically configured to:
acquire a random access channel resource in the system information block signaling and perform information transmission on the random access channel resource.

45. The apparatus according to claim 42, wherein when performing, according to the system information block signaling, the signal transmission with the access network device, the processor is specifically configured to:
receive the configuration information of the first message, the configuration information of the second message, and the configuration information of the third message; and
perform information transmission on the configuration information of the first message, the configuration information of the second message, and the configuration information of the third message.

46. The apparatus according to any one of claims 41, 42, and 45, wherein the random access channel resource comprises a time-domain resource and a frequency-domain resource, wherein the time-domain resource comprises a physical random access channel time-domain resource configuration index, a period, a system frame number, a subframe/time slot number, a starting symbol and a number of random access occasions within a time slot, and the frequency-domain resource comprises a number of different physical random access channel frequency-domain resources which are frequency-division-multiplexed on a same time-domain resource.

47. A signal transmission apparatus, **characterized in that** the apparatus is disposed in an access network device, and the apparatus comprises:
a sending module, configured to send system information block signaling in a first cell, or send the system information block signaling in the first cell and a cell group, wherein the system information block signaling comprises configuration information for access by user equipment in the first cell and/or the cell group, and the cell group comprises other cells except the first cell; and
a receiving module, configured to perform signal transmission with user equipment which performs access according to the system information block signaling.

48. The apparatus according to claim 47, wherein the receiving module is specifically configured to:
determine, according to the configuration information in the system information block signaling, a transmission and reception position of a random access channel resource configured for the first cell and/or the cell group; and
receive, according to the transmission and reception position of the random access channel resource configured for the first cell and/or the cell group, information transmitted by the user equipment which performs access according to the system information block signaling.

49. The apparatus according to claim 47, wherein the configuration information for the access by the user equipment in the first cell and/or the cell group comprises at least one of the following: configuration information of a cell, configuration information of a random access channel resource, or configuration information of an information transmission resource.

50. The apparatus according to claim 49, wherein the configuration information of the cell, the configuration information of the random access channel resource, and the configuration information of the information transmission resource comprise at least one of explicitly indicated configuration information or implicitly indicated configuration information;
wherein the explicitly indicated configuration information comprises at least one of the following:
explicitly indicated configuration information of the cell;
explicitly indicated configuration information of the random access channel resource; or
explicitly indicated configuration information of the information transmission resource; and
the implicitly indicated configuration information comprises at least one of the following:
implicitly indicated configuration information of the cell;
implicitly indicated configuration information of the random access channel resource; or
implicitly indicated configuration information of the information transmission resource.

51. The apparatus according to claim 50, wherein the explicitly indicated configuration information of the cell comprises at least one of the following:
cell information of the first cell; or
cell information of the cell group;
the explicitly indicated configuration information of the random access channel resource comprises at least one of the following:
configuration information of the random access channel resource; or
association information of the random access channel resource;
the explicitly indicated configuration information of the information transmission resource comprises at least one of the following:
configuration information of the information transmission resource; or
association information of the information transmission resource;
the implicitly indicated configuration information of the cell comprises at least one of the following:
flag information of the cell information of the first cell; or
flag information of the cell information of the cell group;
the implicitly indicated configuration information of the random access channel resource comprises at least one of the following:
flag information of the random access channel resource; or
flag information of the association information of the random access channel resource; and
the implicitly indicated configuration information of the information transmission resource comprises at least one of the following:
flag information of the information transmission resource; or
flag information of the association information of the information transmission resource.

52. The apparatus according to claim 51, wherein the configuration information of the random access channel resource comprises at least one of the following:
a random access channel resource of the first cell; or
a random access channel resource of the cell group; and
the association information of the random access channel resource comprises:
synchronization block information associated with the random access channel resource;
cell information associated with the random access channel resource; and
control resource set information associated with the random access channel resource.

53. The apparatus according to claim 51, wherein the configuration information of the information transmission resource comprises at least one of the following:
an information transmission resource of the first cell; or
an information transmission resource of the cell group, the information transmission resource comprising configuration information of a first message, configuration information of a second message, and configuration information of a third message; and
the association information of the information transmission resource comprises at least one of the following:
synchronization block information associated with the information transmission resource;
cell information associated with the information transmission resource; or
control resource set information associated with the information transmission resource.

54. The apparatus according to claim 51, wherein the cell information of the first cell comprises at least one of the following:
an identification of the first cell;
synchronization block information of the first cell;
control resource set information of the first cell;
a search space of the first cell; or
system information block signaling of the first cell; and
the cell information of the cell group comprises at least one of the following:
identification information of the cell group;
synchronization block information of the cell group;
a control resource set of the cell group;
a search space of the cell group; or
system information block signaling of the cell group.

55. The apparatus according to claim 51, wherein the flag information of the cell information of the first cell comprises: an identification of the first cell; and the flag information of the cell information of the cell group comprises: an identification of the cell group, and/or an identification of a second cell in the cell group.

56. The apparatus according to claim 51, wherein the flag information of the random access channel resource comprises at least one of the following:
whether a random access channel resource of the first cell is applied to the cell group;
whether the random access channel resource of the first cell is applied to a second cell in the cell group; or
whether a random access channel resource of the cell group is applied to the second cell in the cell group; and
the flag information of the association information of the random access channel resource comprises at least one of the following:
whether the random access channel resource of the cell group is associated with synchronization block information of the first cell;
whether the random access channel resource of the cell group and/or a random access channel resource of the second cell are associated with a normal synchronization block and a priority of the normal synchronization block; or
whether the random access channel resource of the cell group and/or the random access channel resource of the second cell are associated with a sparse synchronization block.

57. The apparatus according to claim 51, wherein the flag information of the information transmission resource comprises: whether an information transmission resource of the first cell is applied to the cell group; and
the flag information of the association information of the information transmission resource comprises:
whether an information transmission resource of the cell group is associated with synchronization block information of the first cell;
whether the information transmission resource of the cell group is associated with a normal synchronization block and a priority of the normal synchronization block; and
whether the information transmission resource of the cell group is associated with a sparse synchronization block.

58. The apparatus according to claim 56 or 57, wherein the normal synchronization block comprises at least one of: a configuration of a synchronization block supported in a preset protocol, a configuration of remaining minimum system information associated with a synchronization block, a configuration of a random access channel resource associated with a synchronization block, or a configuration of paging associated with a synchronization block.

59. The apparatus according to claim 56 or 57, wherein the sparse synchronization block comprises at least one of: synchronization block parameters being configured as partial parameters defined in a preset protocol, a configuration of a target synchronization block which is beyond definition by the preset protocol, a configuration of remaining minimum system information associated with a synchronization block, a configuration of a random access channel resource associated with a synchronization block, or a configuration of paging associated with a synchronization block.

60. The apparatus according to any one of claims 47 to 57, wherein the system information block signaling comprises at least one of: first system information block signaling, second system information block signaling, third system information block signaling, or fourth system information block signaling;
wherein the first system information block signaling is used for configuring a random access channel resource of the first cell and for configuring a random access channel resource of the cell group;
the second system information block signaling is used for configuring the random access channel resource of the cell group;
the third system information block signaling is used for configuring a random channel access resource of a second cell in the cell group; and
the fourth system information block signaling is used for configuring random channel access resources of other cells except the second cell in the cell group.

61. The apparatus according to any one of claims 48 to 57, wherein the random access channel resource comprises a time-domain resource and a frequency-domain resource, wherein the time-domain resource comprises a physical random access channel time-domain resource configuration index, a period, a system frame number, a subframe/time slot number, a starting symbol and a number of random access occasions within a time slot, and the frequency-domain resource comprises a number of different physical random access channel frequency-domain resources which are frequency-division-multiplexed on a same time-domain resource.

62. The apparatus according to any one of claims 53, wherein the first message is used for physical access response, the second message is used for contention resolution, and the third message is used for configuration of a search space.

63. A signal transmission apparatus, **characterized in that** the apparatus is disposed in user equipment, and the apparatus comprises:
a receiving module, configured to receive system information block signaling sent in a first cell by an access network device, or system information block signaling sent in the first cell and a cell group, where the cell group comprises other cells except the first cell, and the system information block signaling comprises configuration information for access by user equipment in the first cell and/or the cell group; and
a transmission module, configured to perform, according to the system information block signaling, signal transmission with the access network device.

64. The apparatus according to claim 63, wherein the configuration information for the access by the user equipment in the first cell and/or the cell group comprises at least one of the following: configuration information of a cell, configuration information of a random access channel resource, or configuration information of an information transmission resource.

65. The apparatus according to claim 64, wherein the information transmission resource comprises configuration information of a first message, configuration information of a second message, and configuration information of a third message, and at least one of the configuration information of the first message, the configuration information of the second message, or the configuration information of the third message is associated with synchronization block information of the first cell.

66. The apparatus according to claim 65, wherein the first message is used for physical access response, the second message is used for contention resolution, and the third message is used for configuration of a search space.

67. The apparatus according to claim 63, wherein the performing, according to the system information block signaling, signal transmission with the access network device comprises:
acquiring a random access channel resource in the system information block signaling and performing information transmission on the random access channel resource.

68. The apparatus according to claim 65, wherein the performing, according to the system information block signaling, signal transmission with the access network device comprises:
receiving the configuration information of the first message, the configuration information of the second message, and the configuration information of the third message; and
performing information transmission on the configuration information of the first message, the configuration information of the second message, and the configuration information of the third message.

69. The apparatus according to claim 64, 65, or 68, wherein the random access channel resource comprises a time-domain resource and a frequency-domain resource, wherein the time-domain resource comprises a physical random access channel time-domain resource configuration index, a period, a system frame number, a subframe/time slot number, a starting symbol and a number of random access occasions within a time slot, and the frequency-domain resource comprises a number of different physical random access channel frequency-domain resources which are frequency-division-multiplexed on a same time-domain resource.

70. A processor-readable storage medium, **characterized in that** the processor-readable storage medium stores a computer program, the computer program being used to cause the processor to perform the method according to any one of claims 1 to 16 or the method according to any one of claims 17 to 23.
